(19)

Europäisches
Patentamt
European
Patent Office
Office européen
des brevets

(11) **EP 2 717 209 A1**

(12) **EUROPEAN PATENT APPLICATION**
published in accordance with Art. 153(4) EPC

(43) Date of publication:
**09.04.2014 Bulletin 2014/15**

(21) Application number: **12788788.3**

(22) Date of filing: **03.04.2012**

(51) Int Cl.:
**G06Q 30/02** *(2012.01)* **G06Q 10/00** *(2012.01)*

(86) International application number:
**PCT/JP2012/002325**

(87) International publication number:
**WO 2012/160744 (29.11.2012 Gazette 2012/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2011 JP 2011117719**

(71) Applicant: **Creative Brains, K.K.
Tokyo 144-0047 (JP)**

(72) Inventor: **SUZUKI, Kazuhiko
Tokyo 144-0047 (JP)**

(74) Representative: **Nicholls, Michael John
J A Kemp
14 South Square
Gray's Inn
London WC1R 5JJ (GB)**

(54) **MARKET EVALUATION INVESTIGATION DEVICE AND INVESTIGATION METHOD**

(57)    By adopting a component index with which it is possible for the evaluation subject to freely move over a screen and cite components of interest of an evaluation object overall image (66), it is possible to efficiently acquire information of the components which receive attention through the eyes of a typical consumer without being constrained by components which the specialists have prepared as objects to be evaluated, and by organizing and grouping the information thus acquired and displaying together with positions and frequencies of components of interest (76a-e), it is possible to easily comprehend investigation results.

FIG.9

**Description**

TECHNICAL FIELD

An object of the present invention is to provide a new investigation device for market investigation or the like unavailable in the past, capable of efficiently gathering and analyzing or the like objective evaluations of typical consumers or the like as evaluation subjects for qualitative information regarding an object for evaluation such as a product design, which fundamentally cannot be uniquely and quantitatively expressed with numerical values.

BACKGROUND ART

In recent years, along with higher level performance of various products, generalization of technology, and the globalization, acceleration and the like of information transfer, the importance of "design" which affects product success and failure has increased. However, at the definition phase and modification phase and the like of a "design," it is difficult to evaluate a "design." To begin with, the "design" which is the external appearance of a product should be evaluated by the product user (in most cases, the general consumer), and the fact that there are many cases when the evaluation of the "design" based on the sensibility of the general consumer differs from the evaluation by an expert in design or the like is one major reason that "design" evaluation is difficult.

However, as the conventional "design evaluation method," quantitative investigations such as survey investigations are often used. For these quantitative investigations, not just simple methods of simply marking a circle or an X on choices prepared in advance, but also methods using reply results according to the language of the general consumer have been developed. In specific terms, an item has been proposed whereby an expert prepares in advance a large amount of evaluation language for evaluating a design such as "modem," "flashy," or the like, these evaluation language and product photographs are simultaneously presented to a general consumer, for example, and the results replied in language by the general consumer regarding how "modem" or "flashy" that product is are consolidated using a statistical calculation process, to calculate the design evaluation overall points.

However, though this kind of improved quantitative investigation has the advantage of being able to efficiently fetch investigation results from a large number of evaluation subjects using a computer network such as the internet or the like as noted in Patent Documents 1 and 2, it was difficult to obtain investigation results based on the sensibility of general consumers. Specifically, a "design" is created with the subjective intention of a designer who is an expert, but its evaluation and the decision of whether or not to purchase it is made according to the sensibility of a general consumer, and the fact is that there is quite a large skew in the evaluation between experts and general consumers. Because of that, with "design" market investigations, it is that much more important to have the evaluation of a "design" be done not by an expert but rather according to the pure sensibilities of general consumers. However, even when trying to obtain an evaluation according to the pure sensibility of a general consumer, as described previously, with a quantitative study, by the expert preparing in advance many measures describing the "design" such as "modem," "flashy" or the like, the framework of the design evaluation by the general consumer is restricted within the frame thought of by the expert. Therefore, when there is an evaluation measure in the sensibility of the general consumer that was not thought of by the expert, it is very difficult to detect the evaluation results by that evaluation measure using that quantitative investigation.

Separate from this kind of quantitative investigation, qualitative investigations such as group interviews, depth interviews and the like are also known. Qualitative investigations are a method that in contrast to quantitative investigations that use question sheets or the like, do individual or group interviews with general consumers, and without preparing evaluation language in advance, it is possible to obtain replies which are a "design" evaluation with free language of the consumer. However, with this kind of qualitative investigation, in addition to it being necessary to have an interviewer who has received specialized training have a face to face investigation with the general consumer, there is also the big problem of, realistically, the interviewer being limited to a small number of respondents to the degree he is able to organize them in his head. Also, since the number of respondents is limited to a level of several tens or at the most several hundred people, the reproducibility of the results when reinvestigating is low, and in particular, with products for which the number of general consumers is large with a subject such as cell phones, automobiles, home electronic products and the like, having the objective reliability of the investigation results be even one level lower is unavoidable. In fact, even with interviewers who have received training so as not to use leading questions, since it is impossible to completely prevent the mixing in of the subjectivity of the interviewer, it is difficult to say that the obtained opinion of the respondent is based purely on the sensibility of the respondent, it is not possible to eliminate the risk of the opinion having been drawn out by the interviewer, and in light of that point as well, there are questions about the objective reliability of the investigation results.

BACKGROUND ART DOCUMENTS

[Patent Documents]

Patent Document 1: JP-A-2002-149900
Patent Document 2: JP-A-2006-244049

SUMMARY OF THE INVENTION

PROBLEM THE INVENTION ATTEMPTS TO SOLVE

The present invention has been developed with the circumstances as described above as the background, and it is one object of the present invention to provide the following matters of (i)-(iii) as for evaluation objects for which measurement with numerical values using a precise scale is fundamentally unsuitable, such as for clothing design, cell phone design or the like:

(i) to make it possible to fetch results for which a qualitative evaluation was performed based on the free will of the evaluation subject, without advance preparation of measures or terms for evaluating the object, while removing to the extent possible the mixing in of the subjectivity of an expert,
(ii) to realize high reliability and generalization of evaluation results by efficiently fetching evaluation results by a large number of evaluation subjects without requiring a large amount of effort or time, and
(iii) to realize a new "market evaluation investigation device and investigation method" that allows display of the obtained evaluation results in a way that is easy to understand.

MEANS FOR SOLVING THE PROBLEM

A first mode of the present invention relates to the "market evaluation investigation device" created to attain the object, and provides a market evaluation investigation device being characterized by comprising: (a) an evaluation object display means for displaying an image of an evaluation object on a screen; (b) a component index display means for displaying a component index specifying in partial form the evaluation object on the screen on which the entire image of the evaluation object is displayed; (c) a component of interest input means for having the component index moved on the screen and having position information of component of interest input; (d) an information storage means for storing component of interest-position-information input by the component of interest input means, respectively fetched by a plurality of evaluation subjects regarding the evaluation object; (e) a grouping calculation means for grouping together items for which the positions of the components of interest are close, with the component of interest-position-information stored in the information storage means as the subject; (f) a component of interest position display means for displaying on the screen the positions of the components of interest for which the number was made smaller by the component of interest-position-information being grouped by the grouping calculation means; and (g) a component of interest frequency display means that differentiates a display format of the position of the component of interest according to the number of component of interest-position-information gathered in each component of interest group, regarding the position of each component of interest displayed on the screen by the component of interest position display means.
With the investigation device constituted according to this kind of mode, by using the constitutions (a) to (c) noted above, it is possible for the evaluation subject to freely selectively specify components of interest using his own sensibilities. Therefore, it is possible to freely specify the component one is focusing on when the evaluation subject such as a general consumer or the like is doing an evaluation without being bound to evaluation object components prepared in advance by an expert, and it is possible to obtain objective evaluation results for the components being focused on in terms of design.
In the investigation device of this mode, in conjunction with making it possible to freely specify the focus components that the evaluation subject selected himself using the constitutions (a) to (c) noted above, the constitutions (e) to (f) noted above are also employed. This makes it possible to efficiently arrange each separate component of interest obtained by a plurality of evaluation subjects, and to represent the evaluation results in an easy to understand format. In particular, almost none of the position information of each component of interest for which it was made possible to specify freely by each evaluation subject using constitutions (a) to (c) have the same position, but it is possible to efficiently arrange those diverse position information using constitution (e), and to do an easy to understand screen display using constitution (f), and it is also possible to effectively reflect the sensibilities of each evaluation subject arranged using constitution (g) in the form of a frequency and display it on a screen in a way that is easy to understand.

The investigation device of this mode makes also it possible for the evaluation subject himself to perform the evaluation input operation using the constitutions (a) to (c) noted above, as well as for processing the evaluation information calculation process and the evaluation results output process by using the constitutions (d) to (g) noted above. Therefore, the manpower and labor required for the investigation is reduced, and it is possible to efficiently obtain and process evaluation results by a large number of evaluation subjects.

A second mode of the present invention relates to the "market evaluation investigation device" according to the first mode wherein mode, further comprising: a subject attribute input means by which subject attribute information relating to attributes of the evaluation subject is made to be input is provided; a first evaluation subject selection means that stores the subject attribute information input using the subject attribute input means in the information storage means, and selects the evaluation subject to be the subject using the subject attribute information stored in the information storage means; a first evaluation information limiting means that selects the component of interest-position-information obtained by the evaluation subject selected using the first evaluation subject selection means from among the component of interest-position-information stored in the information storage means respectively fetched by the plurality of the evaluation subjects regarding the same evaluation object, wherein processing is executed using the grouping calculation means with the component of interest-position-information selected using the first evaluation information limiting means as the subject.

With the investigation device of this mode, as attributes of the evaluation subjects, it is possible to easily obtain investigation results using subject attribute information such as gender, age level, residence, job category, academic background, annual income, amount expended for a specific object, hobbies and the like, for example. Specifically, since it is possible to analyze market evaluation investigation results by narrowing down the evaluation subjects using specific attributes using the first evaluation information limiting means, and to display those results on a screen, it is possible to easily and efficiently grasp the evaluation differences and the like by the differences in evaluation subject attributes.

The third mode of the present invention relating to the "market evaluation investigation device" according to the first or second mode, further comprising: an overall evaluation input means for inputting a selection made from a plurality of choices of overall evaluation information relating to the evaluation object prepared in advance, the overall evaluation information inputted by the overall evaluation input means being stored in the information storage means; a second evaluation subject selection means for selecting evaluation subjects using the overall evaluation information stored in the information storage means; and a second evaluation information limiting means for selecting the component of interest-position-information obtained by the evaluation subject selected using the second evaluation subject selection means from among the component of interest-position-information stored in the information storage means fetched respectively by the plurality of evaluation subjects regarding the same evaluation object, wherein processing by means of the grouping calculation means is executed with the component of interest-position-information selected by the second evaluation information limiting means as the subj ect.

With the investigation device of this mode, as the overall evaluation regarding the evaluation object, for example, it is possible to distinguish evaluation subjects self-judged as "Like Overall" and evaluation subjects self judged as "Dislike Overall," analyze the market evaluation investigation results each separately, and display those results on a screen. Because of that, even with the same component of interest, it is possible to do an evaluation distinguishing between whether that is a component of interest that was affected by one's own judgment of "Like Overall" or a component of interest that was affected by one's own judgment of "Dislike Overall."

The fourth mode of the present invention relating to the "market evaluation investigation device" according to any one of the first through third modes, wherein the grouping calculation means includes a grouping threshold value setting means that changes a threshold value which is a maximum separation value of the component of interest-position-information gathered in the same group.

With the investigation device of this mode, it is possible to make more diverse use of analysis results and perform observations more easily by setting the threshold value high and roughly specifying the component of interest with the grouping calculation means, or setting that threshold value low and observing in detail the differences in the components of interest.

The fifth mode of the present invention relating to the "market evaluation investigation device" according to any one of the first through fourth modes, wherein the grouping calculation means includes a display group selection means that selects only groups for which the number of the component of interest-position-information gathered in the same group exceeds a preset standard number, and displays on the screen the component of interest with the component of interest position display means.

In this mode, the investigation device is able to adjust the standard number of selected component of interest groups to be displayed on the screen. This makes it possible, for example, to make it even easier to understand the results with the analysis results for which components of interest for which only a slight number of evaluation subjects are interested are ignored by raising the standard number, or alternatively to do an even more detailed evaluation by lowering the standard number and making the components of interest of only a small number of evaluation subjects the object.

The sixth mode of the present invention relating to the "market evaluation investigation device" according to any one of the first through fifth modes, further comprising: a language information input means for inputting a language expressing a reason for the component of interest input with the component of interest input means; a language display means for storing language information input using the language information input means respectively fetched by a plurality of evaluation subjects for the same evaluation object in the information storage means, and displaying on the screen together with the component of interest the language input using the language information input means; a display language selection means for determining the language to display on the screen using the language display means by selecting only the language input by a number that exceeds a preset standard number among the language input using the language information input means; and a language frequency information display means for differentiating the display format of the component of interest according to the number of inputs of each language for each language displayed on the screen with the language display means.

With the investigation device of this mode, the evaluation results according to the sensibilities of the evaluation subjects can be inputted by using language which is a varied expression means. This makes it possible to obtain extremely detailed evaluation information compared to when simply specifying only "components of interest," and to perform analysis of a market evaluation that reflects that. Particularly with this mode, the same as with the specifying operation of the "component of interest" described previously, even when doing a "language" input operation, the existence of an expert such as an interviewer or the like is unnecessary, and it is possible for the evaluation subject such as a general consumer or the like to input language freely according to his own sensibility. Owing to this arrangement, it is possible to obtain language information honestly reflecting the sensibility of evaluation subjects such as general consumers or the like as evaluation information, without being bound to evaluation scales or criteria prepared in advance by an expert. In fact, with this mode, by fetching "language" information as evaluation information, qualitative evaluation information more reliably reflecting the qualitative evaluation of the evaluation object is obtained, and it is possible to reflect that in the evaluation results.

The seventh mode of the present invention of the "market evaluation investigation device" according to any one of the first through sixth modes, further comprising: a language information input means for inputting a language expressing a reason for the component of interest input with the component of interest input means; and a display matrix calculation means that, regarding the evaluation object, uses the component of interest-position-information stored in the information storage means and the language information fetched with the language information input means, finds a multidimensional matrix that uses as an element each value of a frequency distribution represented having the component of interest-position-information be either of row items or column items, and the language information be the other of the row items or the column items, and obtains a display matrix for which the multidimensional matrix is dimensionally compressed; and a coordinate system association display means that associates with a coordinate system each component of interest image and each language of the language information of the evaluation object corresponding to the component of interest-position-information based on the display matrix obtained with the display matrix calculation means, and displays this on the screen.

The investigation device of this mode is able to comprehensively hand component of interest information displayed using images and component of interest information displayed using language and implementing special calculation processing, rather than numerical values or the like, by associating those information using images and information using language together in the same coordinate system and visually developing the display. Therefore, the information using images and the information using language can mutually supplement each other together, and it is possible to display the analysis results of the market investigation in an easier to understand format.

The coordinate system represented on the screen particularly with this mode does not have a specific measure or the like set prepared in advance, but rather is an item for which image and language information relating to the component of interest is obtained as specific calculation processing results handled comprehensively, and does not have scales or indexes given in advance. Thus, while referencing language associated with an appropriate position using an unknown scale hidden in the depths of these between each component of interest of the evaluation object from images of each component of interest associated with that coordinate system, it is possible to have an objective and visual grasp of each of those components of interest and evaluate them. In other words, the analysis results displayed on the screen with this mode are the results obtained by the ultimate technique for representing qualitative evaluation results based on the sensibilities of evaluation subjects such as general consumers or the like, while removing to the extent possible frameworks and scales given by an expert.

The eighth mode of the present invention relating to the "market evaluation investigation device" according to the seventh mode, wherein in the display matrix calculation means, the component of interest-position-information and the language information respectively fetched for a plurality of the evaluation objects are consolidated into one multidimensional matrix, and the display matrix is found from the multidimensional matrix.

With the investigation device of this mode, for the plurality of evaluation objects, it is not necessary to directly fetch their reciprocal evaluation information, and based on the evaluation information obtained for each of the evaluation objects (including component of interest-position-information and language information), their reciprocal evaluation results are found using the previously described special calculation process, and it is also possible to display those on the screen in an easy to understand format.

The ninth mode of the present invention relating to the "market evaluation investigation device" according to the seventh or eighth mode, wherein in the display matrix calculation means, an overall image of the evaluation object is added to the same row or column item as the component of interest-position-information in the multidimensional matrix, and a total value of each frequency of the language information used as an element of the multidimensional matrix is used as an element of the overall image, while the display matrix is obtained by dimensionally compressing the multidimensional matrix obtained using that, and in the coordinate system association display means, in addition to the component of interest image and the language, the overall image is also associated with the coordinate system, and is displayed on the screen.

With the investigation device of this mode, by doing analysis including the entire image of the evaluation object, it is possible to display on the screen the reciprocal evaluation results of a plurality of evaluation objects in an even easier to understand format. Also, by observing which relative position each component image constituting each overall image is associated with in the coordinate system, it is easy to understand things such as how each component of interest expressed by each component image contributes to the overall evaluation of the evaluation object.

The tenth mode of the present invention relating to the "market evaluation investigation device" according to the ninth mode, wherein the coordinate system association display means includes a display selection means of the component of interest image that selectively hides the display of the component of interest image on the screen.

With the investigation device of this mode, for example when associating evaluation results for a plurality of evaluation objects to one coordinate system, it is possible to resolve problems such as having there be more images than necessary and having it be difficult to understand the subject evaluation results.

The eleventh mode of the present invention relating to the "market evaluation investigation device" according to any one of the seventh to tenth modes, further comprising an element correlation display means which, by correlating each item of the component of interest-position-information in the multidimensional matrix with each language of the language information used as an element of each of the items and displaying this on the screen, displays the correlation of the component of interest image and each language displayed on the screen with the coordinate system association display means.

With the investigation device of this mode, for example even when images and language are associated for a plurality of components of interest with one coordinate system, it is possible to specify language correlated to a specific component of interest and make it easier to understand.

Another aspect of the present invention relating to the "market evaluation investigation method" provides a market evaluation investigation method being characterized by comprising: ($\alpha$) an evaluation object display step of a computer displaying an image of an evaluation object on a screen; ($\beta$) a component of interest-position-information fetching step of the computer displaying a component index that indicates in parts the evaluation object on the screen on which an entire image of the evaluation object is displayed, and fetching position information of component of interest by fetching the position information on the screen of the component index moved on the screen by outside input; ($\chi$) a storage step of the computer storing in an information storage means the component of interest-position-information fetched with the component of interest-position-information fetching step; ($\delta$) a grouping calculation step of the computer using the component of interest-position-information stored in the information storage means as the subject, and executing a calculation process that gathers and groups items with nearby positions of the components of interest; and ($\epsilon$) a display step of the computer displaying on the screen the positions of the components of interest made into a small number by being grouped with the grouping calculation step, and displaying a frequency belonging to each of the components of interest by differentiating the display format of the position of the component of interest according to the number of the component of interest-position-information gathered in each component of interest group.

According to the investigation method of the present invention, the same as with the investigation device of the first mode, the components of interest in terms of design selected based on the personal sensibilities of the evaluation subject such as a general consumer or the like is reflected, and it is possible to efficiently obtain objective evaluation results with little effort.

With the investigation method of the present invention, it is preferable to further use ($\phi$) a language information fetching step of the computer fetching from outside language information constituted from language representing a reason for interest regarding the component of interest, ($\gamma$) a storage step of the computer affiliating the language information fetched with the language information fetching step to the component of interest-position-information fetched with the component of interest-position-information fetching step and storing this in the information storage means, ($\eta$) a display matrix calculation step of the computer using the component of interest-position-information and the language information stored in the information storage means, finding a multidimensional matrix using as an element each value of a frequency distribution represented having the component of interest-position-information be either of row items or column items and having the language information be the other of the row items or the column items, and finding a display matrix for which the multidimensional matrix is dimensionally compressed, and ( ι ) a coordinate system association display step of the computer, based on the display matrix obtained with the display matrix calculation step, associating each component of interest image of the evaluation object corresponding to the component of interest-position-information and each language of the language information with a coordinate system, and displaying that on the screen.

In this way, by using each of the aforementioned steps (α) through ( ι ), the same as with the investigation device according to the seventh mode, with the coordinate system that is the coordinate system obtained by considering and analyzing the mutual relationship between the information by images and the information by language, which is expressed using an unknown scale hidden in the depths between each component of interest of the evaluation object, it is possible to display on the screen as market evaluation analysis results the screen information for which their information by image and information by language are suitably associated. Accordingly, frameworks or scales by an expert are excluded to the extent possible, and the qualitative evaluation results based on the sensibilities of the evaluation subjects such as general consumers or the like can be displayed in an easy to understand format.

Yet another aspect of the present invention relates to an information recording medium which can be read by a computer on which a program is placed for executing on the computer the "market evaluation investigation method" of the present invention as described above, or alternatively a program for executing on a computer that "market evaluation investigation method."

EFFECT OF THE INVENTION

As is clear from the description above, with the market evaluation investigation device and investigation method of the present invention, it is possible to efficiently fetch results for which a qualitative evaluation was performed based on the free will of the evaluations subject while excluding to the extent possible the mixing in of the subjectivity of an expert, and to display these in an easy to understand way while retaining high reliability and generalization of the evaluation results.

BRIEF DESCRIPTION OF THE DRAWINGS

FIG. 1 is a block diagram schematically showing the hardware configuration of the market evaluation investigation device as a first embodiment of the present invention.
FIG. 2 is a block diagram schematically showing the hardware configuration of the investigation device of a first embodiment of the present invention.
FIG. 3 is a flow chart for describing the operation of the information fetching process with the investigation device of the first embodiment of the present invention.
FIG. 4 is a flow chart for describing the operation of the calculation analysis process with the investigation device of the first embodiment of the present invention.
FIG. 5 is a flow chart for describing the operation of the grouping calculation process with the investigation device of the first embodiment of the present invention.
FIG. 6 is an explanatory drawing showing an example of a screen display for the investigation device of the first embodiment of the present invention.
FIG. 7 is an explanatory drawing showing an example of another screen display for the investigation device of the first embodiment of the present invention.
FIG. 8 is an explanatory drawing showing an example of another screen display for the investigation device of the first embodiment of the present invention.
FIG. 9 is an explanatory drawing showing an example of another screen display for the investigation device of the first embodiment of the present invention.
FIG. 10 is an explanatory drawing showing an example of another screen display for the investigation device of the first embodiment of the present invention.
FIG. 11 is an explanatory drawing showing an example of another screen display for the investigation device of the first embodiment of the present invention.
FIG. 12 is an explanatory drawing showing the display screen corresponding to FIG. 9 when the grouping threshold (tp) is changed to be smaller with the grouping calculation process shown in FIG. 5.
FIG. 13 is an explanatory drawing showing the display screen corresponding to FIG. 9 when the grouping threshold (tp) is changed to be larger with the grouping calculation process shown in FIG. 5.
FIG. 14 is an explanatory drawing showing the display screen corresponding to FIG. 9 when the reference number (tn) of the components of interest display is changed to be smaller with the calculation analysis process shown in FIG. 4.

FIG. 15 is an explanatory drawing showing the display screen corresponding to FIG. 9 when the reference number (tn) of the components of interest display is changed to be larger with the calculation analysis process shown in FIG. 4.

FIG. 16 is a block diagram schematically showing the hardware configuration of the investigation device of the second embodiment of the present invention.

FIG. 17 is a flow chart for describing the operation of the information fetching process with the investigation device of the second embodiment of the present invention.

FIG. 18 is a flow chart for describing the operation of the calculation analysis process with the investigation device of the second embodiment of the present invention.

FIG. 19 is an explanatory drawing showing an example of a screen display with the investigation device of the second embodiment of the present invention.

FIG. 20 is an explanatory drawing showing an example of another screen display with the investigation device of the second embodiment of the present invention.

FIG. 21 is an explanatory drawing showing an example of a screen display with the investigation device of the second embodiment of the present invention.

FIG. 22 is an explanatory drawing showing an example of another screen display with the investigation device of the second embodiment of the present invention.

FIG. 23 is a block diagram schematically showing the hardware configuration of the investigation device of the third embodiment of the present invention.

FIG. 24 is a flow chart for describing the operation of the information fetching process with the investigation device of the third embodiment of the present invention.

FIG. 25 is a flow chart for describing the operation of the calculation analysis process with the investigation device of the third embodiment of the present invention.

FIG. 26 is an explanatory chart showing a number of examples of clothing designs which are the subject of the market evaluation with the third embodiment of the present invention.

FIG. 27 is an explanatory drawing showing a calculation matrix for describing the operation of the calculation analysis process with the investigation device of the third embodiment of the present invention.

FIG. 28 is an explanatory drawing showing an example of a screen display of the investigation device of the third embodiment of the present invention.

FIG. 29 is an explanatory drawing showing an example of another screen display with the investigation device of the third embodiment of the present invention.

FIG. 30 is an explanatory drawing showing an example of the screen display of the investigation device of the third embodiment of the present invention.

FIG. 31 is an explanatory drawing showing an example of another screen display with the investigation device of the third embodiment of the present invention.

## EMBODIMENTS FOR CARRYING OUT THE INVENTION

Following, we will describe embodiments of the present invention while referring to the drawings.

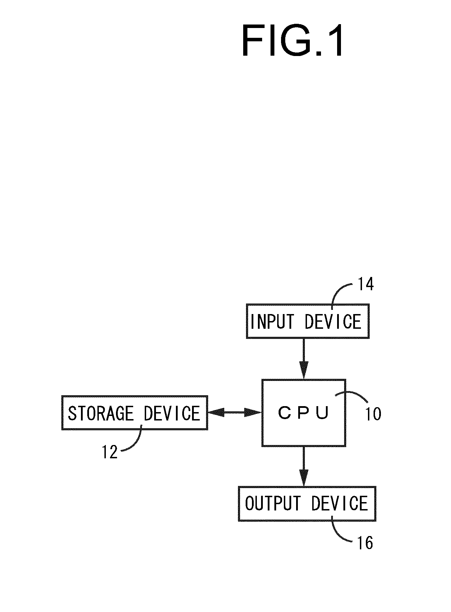

First, FIG. 1 shows as a block diagram a specific example of the hardware configuration of the overall market evaluation investigation device according to the present invention for implementing the method of the present invention. Specifically, the hardware of the investigation device of this embodiment is for example constituted using a typical computer system, equipped with a central processing unit (CPU) 10, and a storage device 12 connected to that such as ROM, RAM, a hard disk or the like, and is also equipped with an input device 14 such as a keyboard, mouse ore the like connected via a suitable interface to the CPU 10, and an output device 16 such as a printer, monitor or the like. Then, the CPU 10 executes a calculation process using signals input from the input device 14 or data stored in the storage device 12 according to the procedures stored in the ROM or RAM in advance, and signals of various types of display and the like are output and the investigation process of the target analysis or the like is executed.

FIG. 1 is a block diagram of the hardware configuration, and the specific structure is not to be interpreted in a limiting fashion, but rather, for example, it is also possible to have the input device 14, the output device 16 and the like connected to the CPU 10 through a communication means such as an internet line or the like and have signals input and output. It is also possible to connect the input device 14, the output device 16 and the like to the CPU.

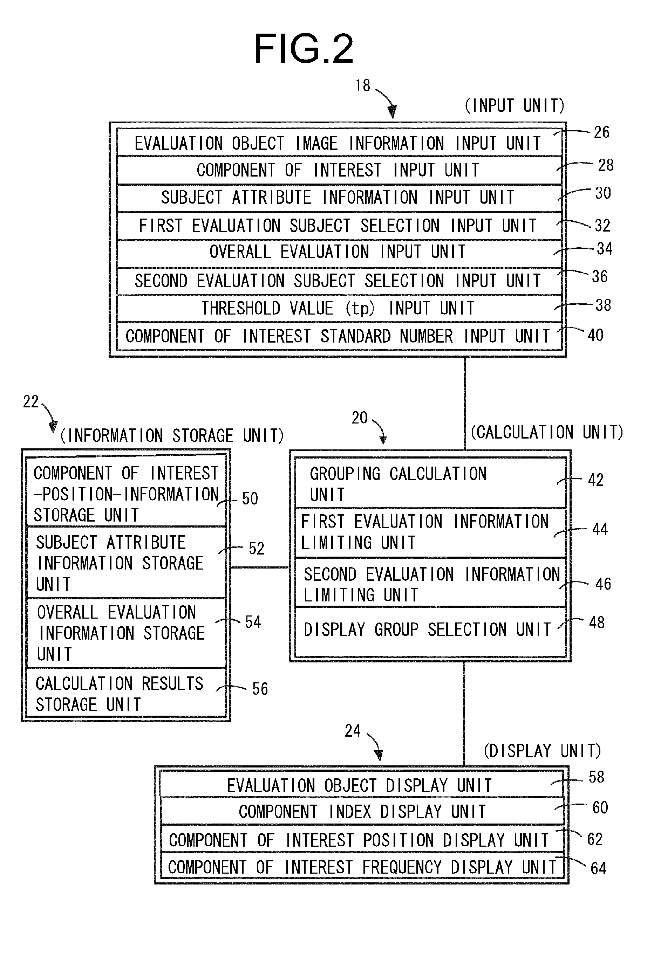

Also, FIG. 2 shows a functional block diagram of this investigation device. Specifically, the investigation device of this embodiment analyzes the market evaluation of the evaluation object represented by an image, and as its functional structural elements, it is equipped with an input unit 18 as an input means for various types of information, a calculation unit 20 as a calculation means for performing calculation processes on various types of information, an information storage unit 22 as an information storage means for storing various types of information input from the input unit 18 and found with the calculation unit 20, and a display unit 24 as display means for displaying on a screen or the like various types of information stored by the information storage unit 22 and found by the calculation unit 20, and each of those functional units further includes the following. Each functional block unit noted hereafter can be realized by introducing suitable software to a computer of the hardware configuration as shown in FIG. 1.

(i) An evaluation object image information input unit 26 for inputting image data of the evaluation object.

(ii) A component of interest input unit 28 as the component of interest input means for inputting the position information of the evaluation object component of interest.

(iii) A subject attribute information input unit 30 as the subject attribute input means for inputting attribute information of the evaluation subject.

(iv) A first evaluation subject selection input unit 32 as the first evaluation subject selection means for selecting evaluation subjects and inputting subject attribute information to be subject in order to narrow down the analysis subject information.

(v) An overall evaluation input unit 34 as the overall evaluation input means for inputting the overall evaluation of the evaluation object.

(vi) A second evaluation subject selection input unit 36 as the second evaluation subject selection means for selecting the evaluation subjects and inputting the overall evaluation information to be subject in order to narrow down the analysis subj ect information.

(vii) A threshold value input unit 38 as the grouping threshold value setting means for inputting the threshold value (tp) when gathering and grouping position information of the component of interest of the evaluation object.

(viii) A component of interest standard number input unit 40 for inputting the standard number (tn) in order to narrow down the components of interest displayed when displaying on the screen the position of grouped components of interest.

(ix) A grouping calculation unit 42 as the grouping calculation means for gathering and making into a small number the components of interest with nearby positions, while referring to the threshold values (tp) input with the threshold value input unit 38.

(x) A first evaluation information limiting unit 44 as the first evaluation information limiting means for doing limiting processing of analysis subject information based on the subject attribute information input with the first evaluation subject selection input unit 32.

(xi) A second evaluation information limiting unit 46 as the second evaluation information limiting means for doing limiting processing of analysis subject information based on the overall evaluation information input with the second evaluation subject selection input unit 36.

(xii) A display group selection unit 48 as the display group selection means for selecting the item to be displayed from among the components of interest grouped with the grouping calculation unit 42, while referring to the standard number (tn) input with the component of interest standard number input unit 40.

(xiii) A component of interest-position-information storage unit 50 for storing the position of the component of interest input with the component of interest input unit 28.

(xiv) A subject attribute information storage unit 52 for storing subject attribute information input with the first evaluation subject selection input unit 32.

(xv) An overall evaluation information storage unit 54 for storing overall evaluation information input with the overall evaluation input unit 34.

(xvi) A calculation results storage unit 56 for storing calculation results information found with the grouping calculation unit 42 or the like.

(xvii) An evaluation object display unit 58 as the evaluation object display means for displaying on the screen the evaluation object input with the evaluation object image information input unit 26.

(xviii) A component index display unit 60 as the component index display means for displaying on the screen a component index for specifying the component of interest on the overall image of the evaluation object displayed with the evaluation object display unit 58.

(xix) A component of interest position display unit 62 as the component of interest position display means for displaying on the screen the component of interest selected with the display group selection unit 48.

(xx) A component of interest frequency display unit 64 as the component of interest frequency display means for displaying the number (level) of the components of interest gathered with the grouping calculation unit 42 for each component of interest displayed on the screen with the component of interest position display unit 62.

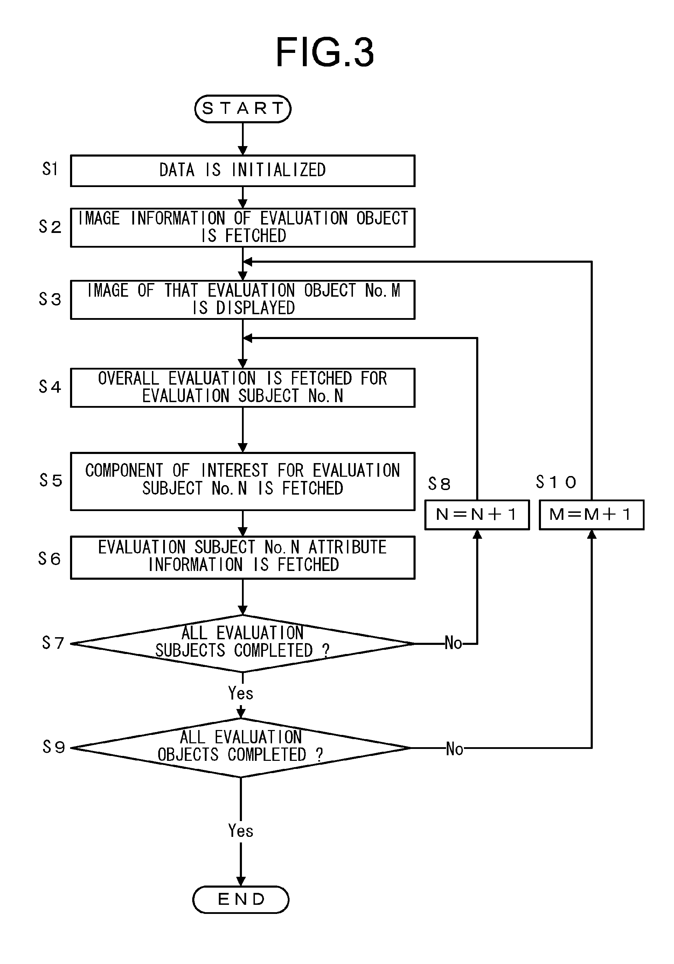

Following, using the constitutions as shown in FIG. 1 and FIG. 2, we will describe the operation and procedure of a series of processes for analyzing a "women's clothing design" as an evaluation object using the investigation device of this embodiment constituted with a general use computer, for example, as a first embodiment of the present invention according to the flow charts shown in FIG. 3 to FIG. 5.

First, when start is instructed and the analysis process starts, the computer implements the information fetching process shown in FIG. 3. In specific terms, at step S1, all the data is initialized. Subsequently, at step S2, image information of the evaluation object is fetched. This image information fetching is performed by input at the image information input unit 26.

With this embodiment, we showed an example using a women's clothing design as the evaluation object, but as long as the evaluation object of the present invention is an item requiring qualitative evaluation, anything is acceptable as long as it can be identified using images. For example, in addition to clothing, of course with items such as automobiles, televisions, sweets, cuisine and the like, and also with advertisements, image films and the like, as long as it is possible to identify that evaluation object using images, and it is possible to select components of interest of a qualitative evaluation with that image, it is possible to be an evaluation object of the investigation device of the present invention.

Also, the image information used with the present invention is acceptable as long as the contents are image data, that it is possible to understand the design of the evaluation object, and also that it is an item for which it is possible to reciprocally distinguish and identify their design when there is a plurality of evaluation objects, and for example in addition to photographic data, it is also possible to use an item created using graphic software or the like. Also, the image data can also be animated data, but still image data is preferable because it is easy to handle and can be understood quickly.

Then, once the evaluation object image information is fetched, at the subsequent steps S3 to S10, evaluation information by the evaluation subject is fetched regarding that evaluation object.

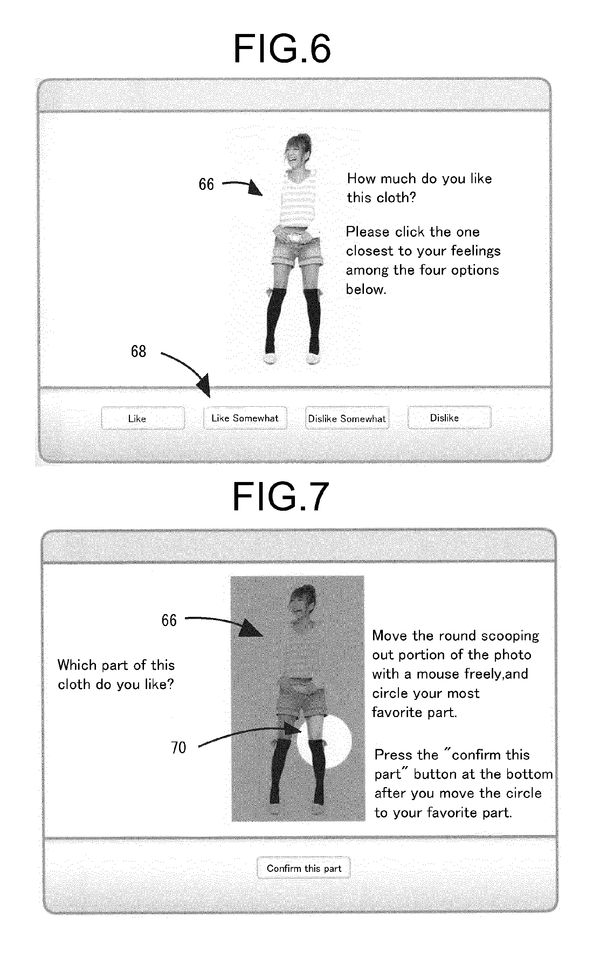

To do that, first, at step S3, an image of that evaluation object is displayed on the screen by the evaluation object display unit 58, and at step S4, the evaluation is fetched for that overall evaluation object. In specific terms, for example as shown in FIG. 6, an evaluation object overall image 66 is displayed on the screen and shown to the evaluation subject, and also, one of a suitable number of a plurality of selection buttons (with this embodiment, four buttons including Like, Like Somewhat, Dislike Somewhat, Dislike) 68 indicating a favorability rating which is the evaluation level as the overall evaluation choices is selected, and the overall evaluation is fetched by inputting the selection results using a mouse click operation or the like.

At the next step S5, the component of interest-position-information for the evaluation object is fetched using the component of interest input unit 28 and the component index display unit 60. In specific terms, as shown in FIG. 7, for example, on the screen on which the evaluation object overall image 66 is displayed, a component index 70 is displayed that can indicate in partial form that evaluation object, the position of this component index 70 on the screen can be changed freely using a mouse operation or the like, and by determining the evaluation subject determining the position of the component index 70 of his own free will, this is fetched as the position information of that component index on the screen. That component index 70 is acceptable as long as it is an item that is able to identify in parts the evaluation object on the screen, and in addition to a circular component index as with the example shown, it is also possible to use an oval, a square, or an arrow or the like. With the circular component index 70 of this embodiment, by identifying the center point of the circle for example by the pixel position on the screen, it is possible to fetch this as the component of interest-position-information.

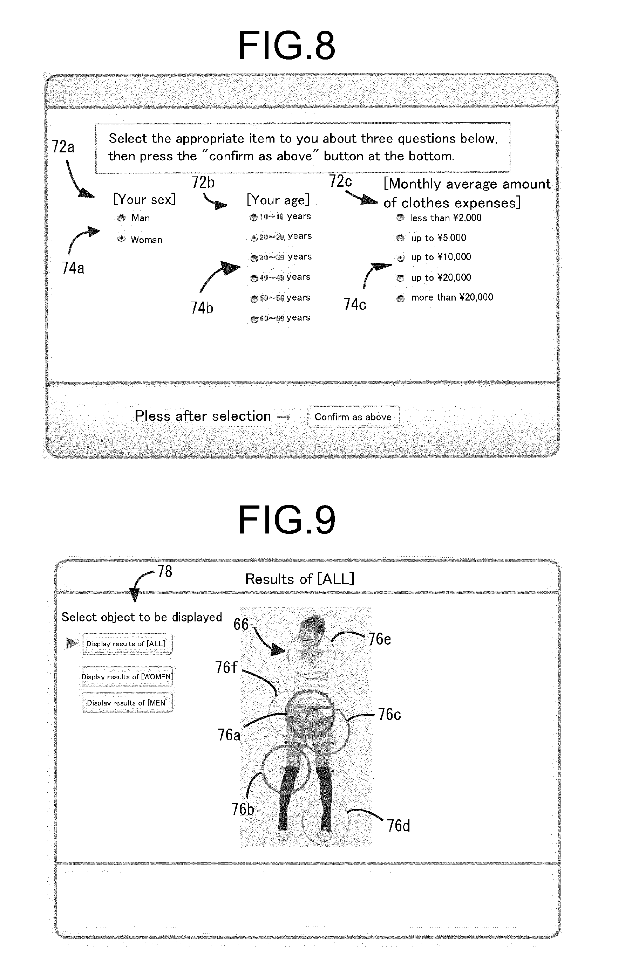

Also, at step S6, the evaluation subject attribute information is fetched using the subject attribute information input unit 30. In specific terms, for example as shown in FIG. 8, questions 72a to c relating to the evaluation subject attributes are displayed on the screen, and the evaluation subject attribute information is fetched by the evaluation subject himself inputting answers to those questions using language or selection buttons 74a to c, or the like.

Then, by executing the judgment and loop processes at steps S7 and S8, for the same evaluation object, the overall evaluation information, the component of interest-position-information, and the subject attribute information according to the aforementioned steps S4 to S6 are fetched, and this is implemented for all the evaluation subjects.

Furthermore, when there is a plurality of evaluation objects, by executing the judgment and loop processes of steps S9 and S10, for all the evaluation objects, the overall evaluation information, the component of interest-position-information, and the subject attribute information according to the aforementioned steps S3 to S8 is fetched for each of the evaluation subjects. With this embodiment, we will describe a case when the number of evaluation objects is one, and the process ends without performing the loop process using steps S9 to S10.

Also, the overall evaluation information, the component of interest-position-information, and the subject attribute information fetched by executing the information fetching process shown in FIG. 3 are stored in the overall evaluation information storage unit 54, the component of interest-position-information storage unit 50, and the subject attribute information storage unit 52 of the information storage unit 22.

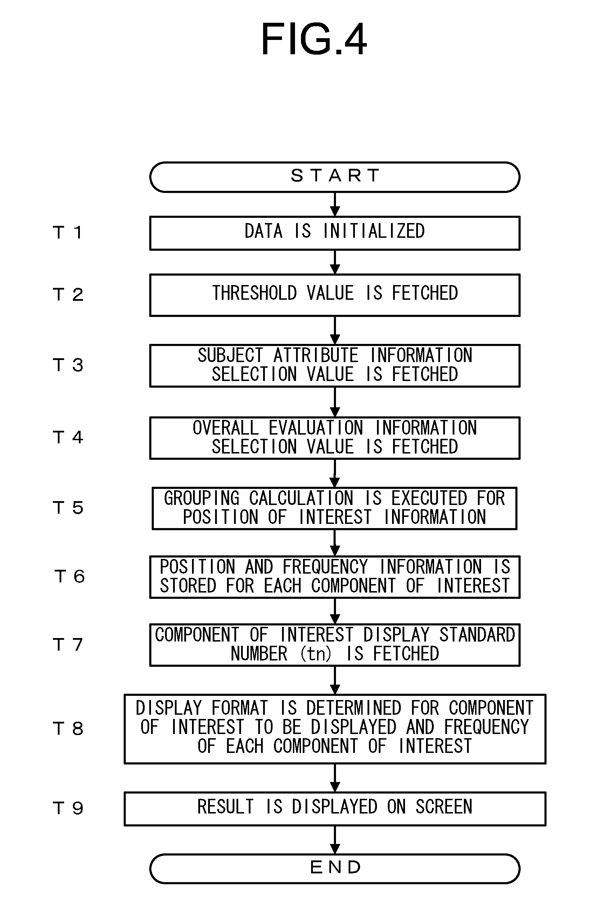

Subsequently, using the information fetched by the information fetching processes described above, the calculation analysis process shown in FIG. 4 is executed. In specific terms, after initialization of the calculation data at step T1, at steps T2 to T4, information deemed to be necessary for the grouping calculation after that is fetched. In specific terms, at step T2, the threshold value that determines the level regarded as the same (same area) as the position of the component of interest is fetched using the threshold value (tp) input unit 38, and at step T3, the subject attribute selection value is fetched that determines the subject attributes for narrowing the evaluation subjects that are subject to investigation and analysis using the first evaluation subject selection input unit 32, and at step T4, the overall evaluation information selection value is fetched that determines the overall evaluation results for narrowing the evaluation subjects that are the subject of investigation and analysis by the second evaluation subject selection input unit 36.

Specifically, with the subject attribute selection value fetched at step T3, for example it is possible to do analysis using information obtained with investigation results for which only women are the subject, do analysis using information obtained with investigation results for which only a specific age level is the subject, and furthermore, to obtain the difference between analysis results when women are the subject and when men are the subject, and the like. Also, with the overall evaluation selection value fetched at step T4, it is possible to do analysis using information obtained with evaluation subjects who sensed "Like" as the overall evaluation for the evaluation object as the subject, to do analysis using information obtained with evaluation subjects who sensed "Dislike" as the subject, or to do analysis using information obtained with evaluation subjects who sensed "Like or Somewhat Like" as the subj ect.

After narrowing the information as this kind of analysis subject, at step T5, using the component of interest-position-information stored in the component of interest-position-information storage unit 50, grouping calculation is executed for the position of interest information obtained by the evaluation subjects selected as the subject of analysis.

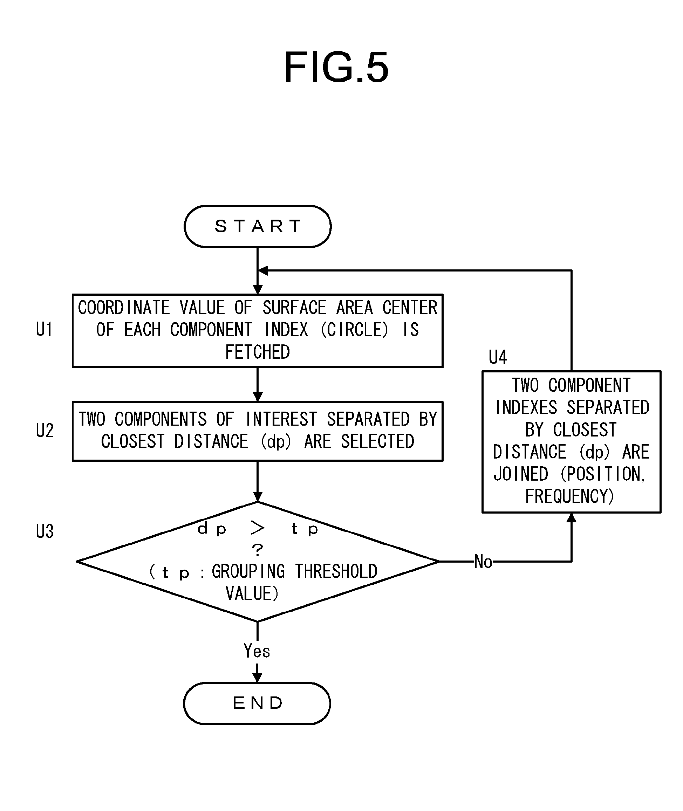

This grouping calculation is processed according to the flow chart shown in FIG. 5, for example. Specifically, at step U1, as the position of interest information to be subject, position information of each component of interest input at step S5 is fetched. This position information can be fetched as coordinate values of the surface area center of that component index 70 when using a circular component index 70 or the like as shown in FIG. 7. Then, at step U2, using all of the fetched position of interest information, the two components of interest separated by the closest distance (dp) are selected. At the subsequent step U3, a determination is made of whether the distance (dp) between those two selected components of interest is greater than the threshold value (tp) specified with input in advasance at step T2, and if dp is not greater than tp, it is determined that the difference between those two component of interest positions is a small enough difference for them to be regarded as the same, and at step U4, those two component of interest positions are viewed as being the same and joined.

With this joining, a new component of interest position is set as the coordinate value for the center of balance of the two component of interest positions, and also, a number (frequency) of the components of interest is set as an item for which two components of interest exist at that position. Then, by executing steps U1 to U4 with all the position of interest information including the new component of interest set by joining as the subject, the grouping calculation process is repeated until there are no more components of interest positioned nearby at the threshold value (tp) or less. By doing this, the components of interest are gathered, and a suitable number of new components of interest which are grouped as groups of suitable size reflecting the size of the threshold value (tp) is set. As the grouping calculation process advances, the frequency of the two components of interest joined to each other increases, but coordinate values are determined for the component of interest after joining with that frequency used for weighting. In specific terms, when obtaining a new component of interest C by joining the component of interest A with the frequency (joint count) 10 and the component of interest B with the frequency (joint count) 2, the point for which the distance from A on a straight line connecting the A coordinates and the B coordinates is 1/5 (the distance from B is 4/5) becomes the position (coordinates) of the new component of interest C, and the frequency of that component of interest C is 12.

Working in this way, after the grouping calculation process is completed, at the subsequent step T6 in FIG. 4, the respective position (coordinate values) and frequency (joint count) information is fetched for all the components of interest for which grouping is completed, and this is stored in the calculation results storage unit 56 of the information storage unit 22.

Next, at step T7, using the component of interest standard number input unit 40, the component of interest display standard number (tn) is fetched that determines the degree of narrowing down of the components of interest for which the calculation results are displayed on the screen. Then, at the subsequent step T8, while referring to this component of interest display standard number (tn), the display format is determined from the frequency of each component of interest found with the grouping calculation process described above, the component of interest that is to be the display subject and its display format are determined, and at step T9, this is displayed on the screen as the result of the calculation analysis process (specifically, the market evaluation investigation results).

Specifically, with the grouping calculation process at step T5 described above, items for which the position is almost the same for a plurality of components of interest are gathered and regarded as the same, but even if the position is separated, for example with a frequency of 1 (component of interest input by only one person), these remain without being joined. However, when doing a market evaluation investigation, there are many cases when there is no value in having items for which the frequency is extremely low such as that be a subject of evaluation, and in fact there is the risk of the judgment being distorted for the investigation results if that is displayed on the screen as analysis results. In light of that, at step T8, for components of interest of a frequency smaller than the preset standard number (tn), it is possible to not display them on the screen as investigation results and to ignore them.

Also, even with components of interest having a frequency of the standard number (tn) or greater, there is a difference in terms of the market evaluation importance based on the size of that frequency. Because of that, at step T8, when displaying a plurality of components of interest on the screen, that display is processed so as to be performed in a format reflecting the frequency of each component of interest. In specific terms, for example, when displaying on the screen each component of interest by having a specified area on the overall image of the evaluation object enclosed by frame such as a circle, square or the like, it is possible to have the concentration or brightness, color saturation, sharpness, transparency or the like within that frame be differentiated in gradations according to the frequency of each component of interest. Incidentally, with this embodiment shown in FIG. 9, each component of interest is identified on the screen by displaying with an overlapping of interest indexes 76a to f composed of a circular frame on the evaluation object overall image 66, and also, display is done by differentiating the circular frame thickness (made thicker the larger the frequency is) of the interest indexes 76a to f according to the number of people belonging to each component of interest (frequency). By doing this, the person viewing the screen is able to easily recognize by his visual sense the differences in the importance (frequency) between each of the components of interest while accurately recognizing the color, brightness or the like of the component of interest.

In this way, according to the market investigation analysis device and analysis method as the first embodiment, it is possible for the general consumer who is the evaluation subject to freely point out the parts he notices (components of interest) only by his own senses. Because of that, in contrast to quantitative investigations such as a conventional survey or the like for which a selection range of answers is prepared in advance, it is possible to obtain investigation results that directly reflect the evaluation results by the sensibility of the replying subject. In fact, the reply of the evaluation subject, by using an internet line or the like, can be obtained by utilizing a very large number of computers, mobile terminals or the like. Because of that, in contrast to quantitative investigations such as a conventional depth interview or the like for which the reply collection volume is limited, it is possible to obtain investigation results that easily and efficiently reflect the replies by evaluation subjects exceeding several thousand or several tens of thousands. Also, the evaluation results processed by the analysis calculation can be simultaneously displayed with the component of interest position and frequency (number) on the screen, and are excellent for evaluation results recognition and use.

Also, with this embodiment, since when obtaining replies, the subject attribute information and overall evaluation information are fetched together, the evaluation subjects are selected using these information, and it is possible to obtain evaluation results with selected specific evaluation subjects as the target, to do a mutual comparison of the evaluation results by different evaluation subjects and the like.

In specific terms, the evaluation results screen shown by example in FIG. 9 is an item for which when doing the grouping calculation of step T5, when a value for which all the evaluation subjects are used as subjects is input as the selection value of the subject attribute information at step T3, the replies of evaluation subjects for which the overall evaluation of the evaluation object at step T4 is "Like" or "Somewhat Like" are processed as the subject. Meanwhile, with the grouping calculation of that step T5, after freely setting the range for the subject attributes and the overall evaluation by changing and setting the selection value input at steps T3 and T4, it is possible to do calculation processing with only the replies by the evaluation subjects in that range as the subjects.

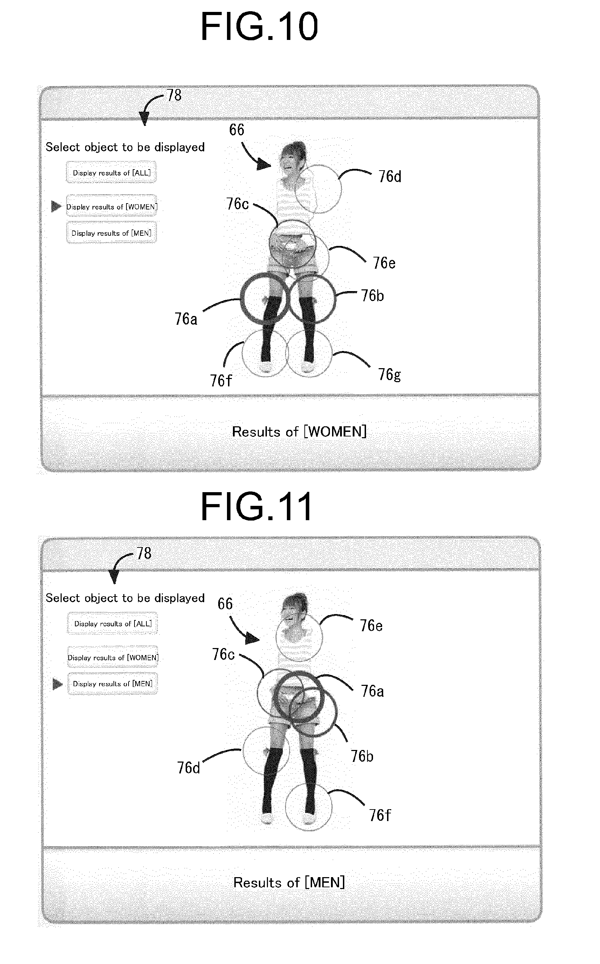

Incidentally, it is possible to have input of the selection value of the subject attribute information at step T3 performed by the selection operation using a button 78 on the screen, and also to display on the same screen evaluation results by the calculation process of step T5 reflecting those selection results, and a specific example of this is shown by example in FIG. 10 and 11. Specifically, FIG. 10 represents on the screen the evaluation results when the selection value of the subject attributes is limited to "Women" at step T3, and meanwhile, FIG. 11 represents on the screen the evaluation results when the selection value of the subject attributes is limited to "Men."

Furthermore, with this embodiment, when executing the process of displaying on the screen the investigation results with the analysis calculation using the fetched market evaluation information, two threshold values are used. One of those is "the threshold value (tp) fetched at step T2 for controlling the positions seen as equivalent," and the other is "the standard number (tn) which is the threshold value fetched at step T7 to control the number of respondents." The former threshold value (tp) is a threshold value for judging at what level of error range the center coordinates of the component of interest selected freely by a large number of evaluation subjects is regarded as having selected "the same site," and the latter standard number (tn) is a threshold value for controlling at about what ratio of people within the number of evaluation subjects a selected site is displayed on the screen as the evaluation result.

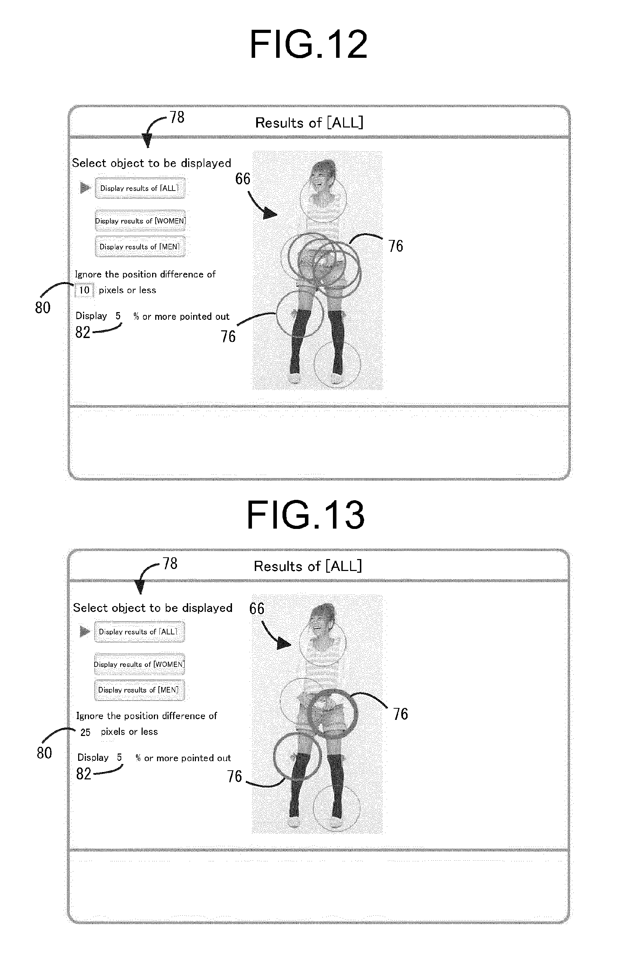

Incidentally, it is possible to have inputting of the threshold value (tp) with step T2 performed on a dialog box 80 on the screen, and also to have the evaluation results by the calculation process at step T5 reflecting that input value displayed on the same screen, and a specific example of that is shown by example in FIG. 12 and 13. Specifically, FIG. 12 represents on the screen the evaluation results when the threshold value (tp) at step T2 is set to "10 pixels," and meanwhile, FIG. 13 represents on the screen the evaluation results when the threshold value (tp) at step T2 is set to "25 pixels." The threshold value (tp) is the separation distance between two components of interest (distance between center points), but with this embodiment, processing is done by pixel count on a program that handles digital images.

When the results display by the threshold value setting of "10 pixels" shown in FIG. 12 and the results display by the threshold value setting of "25 pixels" shown in FIG. 13 are referenced and compared to the results display by the threshold value setting of "20 pixels" shown in FIG. 9, we can see that by lowering the threshold value (tp), as shown in FIG. 12, a more detailed difference in positions is distinguished, more circular frames 76 of the interest index are displayed, and the interest index differences are displayed in more detail. Meanwhile, when the threshold value (tp) is raised, as shown in FIG. 13, the circular frames of the close interest indexes are further integrated, the interest index circular frames 76 are gathered in a lower amount, and we can see that the interest index differences are shown more generally. Specifically, compared to FIG. 9 and FIG. 13, the two interest indexes 76b and 76c in FIG. 9 are integrated together, and are used as one thick (said another way, a larger number of respondents are pooled) interest index, and that position is also moved to between the two interest indexes 76b and 76c. In other words, it is possible to more freely control to what fineness level of resolution one wishes to monitor the components of interest (with this embodiment, the liked sites) by changing the threshold value of that standard.

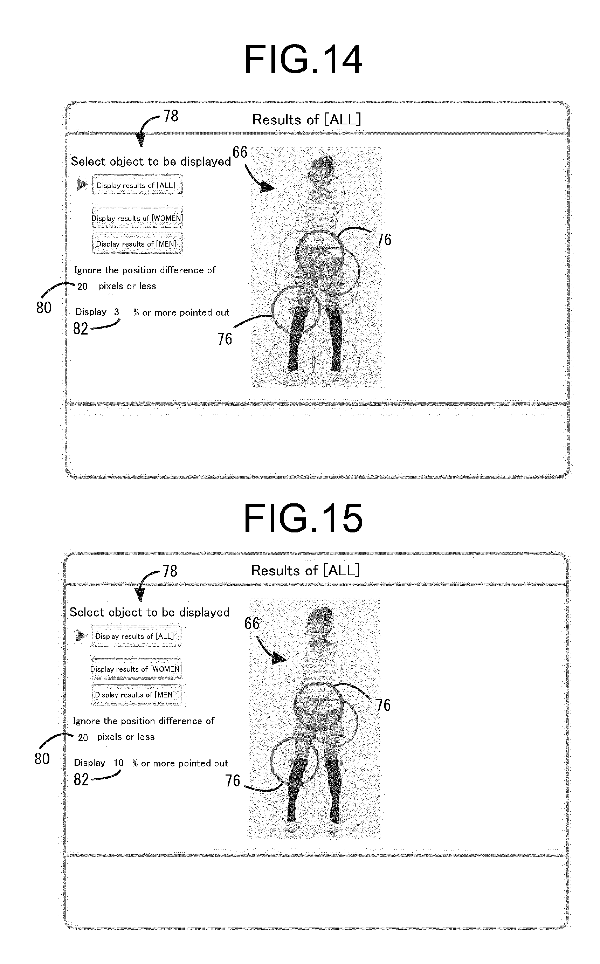

Also, it is possible to have inputting of the standard number (tn) at step T7 be performed on a dialog box 82 on the screen, and also to have the investigation results displayed on the same screen by reflecting that standard number when doing the screen display process at step T8, and a specific example of that is shown by example in FIG. 14 and 15. Specifically, FIG. 14 represents on the screen evaluation results when the standard number (tn) at step T7 is set so that items for which "3%" or more of the people among the total evaluation subjects is selected as the component of interest is set as the object, and meanwhile, FIG. 15 represents on the screen the evaluation results when "10 %" or more is set as the standard number (tn) at step T7.

When the results display according to the "3 %" standard number setting shown in FIG. 14 and the results display according to the "10 %" standard number setting shown in FIG. 15 are referenced and compared to the results display according to the "5 %" standard number setting shown in FIG. 9, by lowering the standard number (tn), as shown in FIG. 14, compared to FIG. 9 initially set to 5 %, we can see that all of the interest indexes 76 in FIG. 9 are left as is, and many more interest indexes 76 are further added and displayed, and that those added and displayed interest indexes 76 are all finer than any of the interest indexes 76 displayed in FIG. 9 (said another way, a small number of respondents are pooled). Meanwhile, when the standard number (tn) is raised, as shown in FIG. 15, we can see that several of the interest indexes 76 shown in FIG. 9 set to the initial 5 % are hidden, and that those hidden interest indexes 76 are finer than any of the remaining displayed interest indexes 76.

With FIG. 12 to 14, we showed one example of an item for which the specification of the threshold value (tp) and the standard number (tn) is made to be performed with numerical value input to the dialog boxes 80 and 82 on the screen, but for example, it is also possible to have it performed in a format such as on a slider control displayed on the screen. Also, by reflecting in the screen display the calculation processing or image processing results reflecting the value specified with that slider control, it is also possible for the image (a plurality of interest indexes 76) representing the evaluation results on the screen to change in roughly real time when the operating lever of the slider control is made to slide.

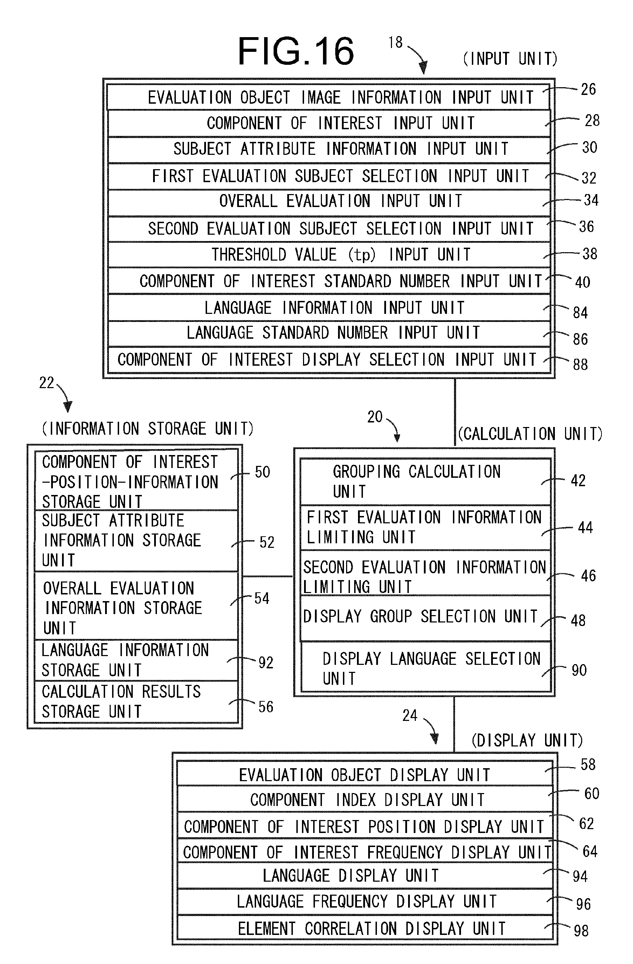

Next, we will describe the market evaluation investigation device and investigation method as the second embodiment of the present invention while referring to FIG. 16 to 22. This embodiment makes it so that with the investigation device and investigation method of the first embodiment, by further fetching language information and executing calculation processing, it is possible to obtain investigation results reflecting that language information. Therefore, for the same constitutional elements as those of the first embodiment, we will omit overlapping explanations by giving the same code numbers as those of the first embodiment.

Specifically, as is clear from the schematic drawing of the hardware configuration shown in FIG. 16, compared to the investigation device of the first embodiment, the investigation device of this embodiment is additionally equipped at the input unit 18 with a language information input unit 84 as the language information input means, a language standard number input unit 86 as the display language standard number input means, and a component of interest display selection input unit 88 as the component of interest display selection means, is additionally equipped at the calculation unit 20 with a display language selection unit 90 as the display language selection means, is additionally equipped with a language information storage unit 92 at the information storage unit 22, and is additionally equipped at the display unit 24 with a language display unit 94 as the language display means, a language frequency display unit 96 as the language frequency information display means, and an element correlation display unit 98 as the element correlation display means.

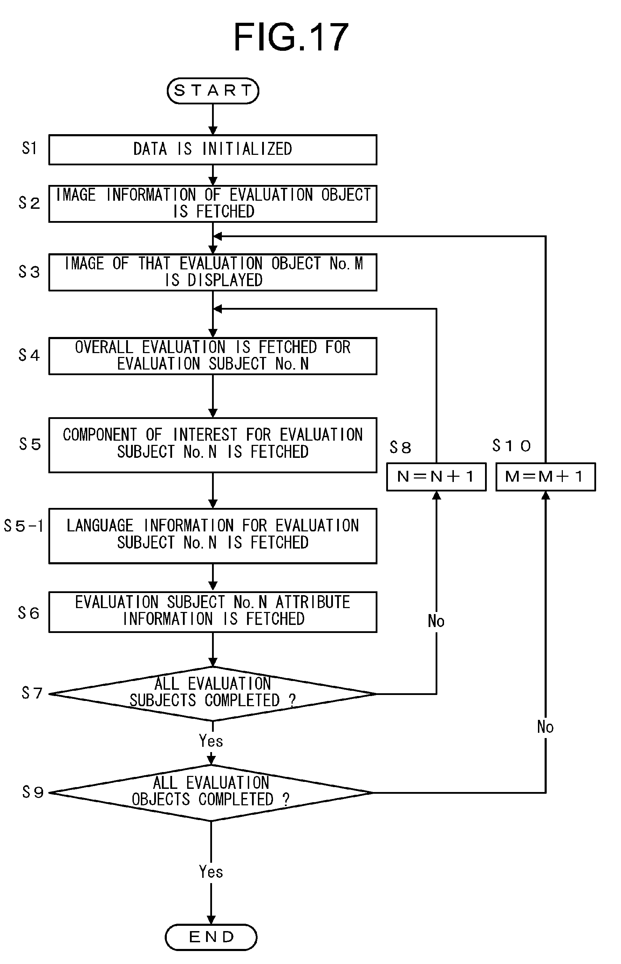

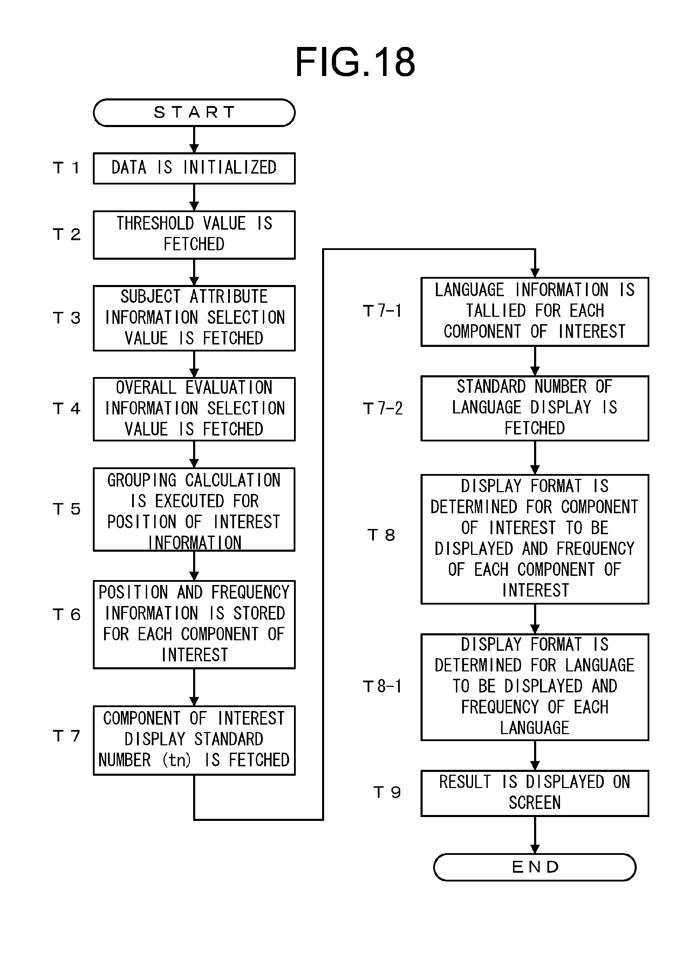

Then, as shown in the flow charts in FIG. 17 and 18, with this embodiment, compared to the first embodiment, for the language information input with the input unit 18 as well, the results of calculation performed with the calculation unit 20 are made to be performed with the addition of a series of operations of the language information process displayed on the screen on the display unit 24.

In more detail, first, when doing the information fetching process shown in FIG. 17, for each evaluation subject, the component of interest-position-information is fetched (step S5), and also, comments such as the evaluation, opinion or the like regarding that component of interest are fetched as language information (step S5-1). The language type does not have to be Japanese, but can also be another language such as English, German or the like, or can be a plurality of national languages or the like. Also, for the language information, text data can also be suitably used because it is easy to handle, has a low data volume and the like. Furthermore, by having the language information constituted from a plurality of "words," this can be an item that represents qualitative information about the evaluation object, for example a collection of terms simply comprising a plurality of "words," or it is possible have as the subject an item including phrases, sentences or the like comprising a combination of a plurality of "words."

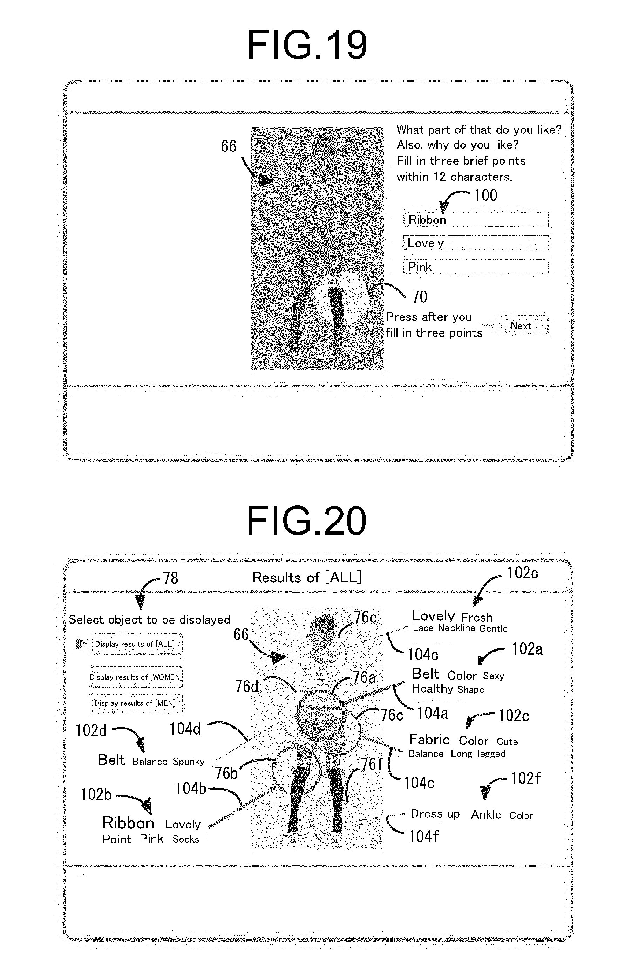

In specific terms, as shown for example in FIG. 19, with the screen on which the evaluation object overall image 66 is displayed, the component indexes 70 for the evaluation subject to indicate and show the components of interest using a mouse operation or the like and for inputting position information are displayed, and also, a suitable number (with this embodiment, 3) of dialog boxes 100 for inputting language are displayed, and inputting of language to those dialog boxes 100 is performed by prompting the evaluation subject.

Also, the language information input at this step S5-1 is stored in the language information storage unit 92 of the information storage unit 22, and also, when doing the calculation analysis process shown in FIG. 18, tallying is done for each component of interest, and in a state reflecting the frequency of each language information (input tally count for each language by all the evaluation subjects), this is displayed on the screen as investigation results. Specifically, as shown in FIG. 18, separate from performing calculation processing of the component of interest-position-information at steps T2 through T7, first, at step T7-1, the input language information is tallied for each position of interest grouped at step T5, and the frequency of each language input for each component of interest that was grouped (specifically, the number of how many of the same language was input by how many evaluation subjects) is tallied. Subsequently, at step T7-2, using the language standard number input unit 86, the standard number (threshold value) of the language display that determines the degree of narrowing of the language displayed on the investigation results screen is fetched. Furthermore, at step T8, the same as with the first embodiment, the display format of the position and frequency of the components of interest that are subject to display is determined, and also, at step T8-1, the display format for the language and its frequency displayed together with each component of interest that is subject to display is determined. Also, at step T9, on the screen representing the results of the calculation analysis process (specifically, the market evaluation investigation results), together with the evaluation object overall image, the component of interest position and frequency is displayed using the interest indexes, and also, the language and frequency corresponding to that component of interest is also displayed together.

In specific terms, as shown for example in FIG. 20, on the screen on which the evaluation object overall image 66 is displayed, a suitable number of interest indexes 76a to f composed of a circular frame the same as with the first embodiment are displayed overlapping, and the position of each component of interest is identified on the screen, and also, the thickness of the circular frame of each of the interest indexes 76a to f is differentiated according to the number of people (frequency) belonging to each component of interest. In addition to that, as the subject of language information input for each of the interest indexes 76a to f, only a suitable number of languages 102a to f according to the standard number of the language display input at step T7-2 is displayed on the screen.

The narrowing of the display language according to the standard number of that language display can be processed by setting in advance the minimum language count to be displayed on the screen or the like, and also for example the same as with the standard number (tn) of the component of interest display at step T7 shown by example with the first embodiment, by inputting using numbers a ratio (%) for which that same language was input among all the evaluation subjects, inputting using a slider operation or the like.

Also, it is possible to display the level of input ratio of that language for all the evaluation subjects so as to be able to easily recognize it on the screen. In specific terms, as shown for example in FIG. 20, by displaying the font of the text displayed on the screen to be larger the larger the language input ratio (%) is, it is possible to represent that text input ratio. In addition, it is also possible to display on the screen the level of the language input ratio by mutually differentiating the concentration or brightness, color saturation, sharpness, transparency or the like for the text or its display area according to the language input ratio.

Yet further, with this embodiment, using the element correlation display unit 98 (FIG. 16), each component of interest and each language are associated with each other and displayed on the screen, and it is easy to recognize on the screen to which of the components of interest each language displayed on the screen corresponds to. In specific terms, as shown for example in FIG. 20, for each of the components of interest 76a to f, correlation lines 104a to f that do a linked display of the respectively corresponding language 102a to f display areas are displayed on the screen together. With these correlation lines 104a to f, for example even when a large number of components of interest 76 are displayed, or when the component of interest 76 and its corresponding language 102 are displayed separated or the like due to reasons such as display space on the screen or the like or the like, it is possible to prevent mistakes in correlation between the components of interest 76 and the language 102, and to easily understand the investigation results from the screen display and the like.

The specific mode for mutually correlating and displaying each component of interest with each language using the element correlation display unit 98 is not limited to that shown in FIG. 20. For example, this can also be realized by making the color, concentration or the like of the circular frame on the screen representing the plurality of components of interest 76a to f mutually different, and using that corresponding color or concentration, displaying each language 102a to f corresponding to each component of interest 76a to f, or displaying a frame body that encloses the display area of each language 102a to f corresponding to each component of interest 76a to f, or the like.

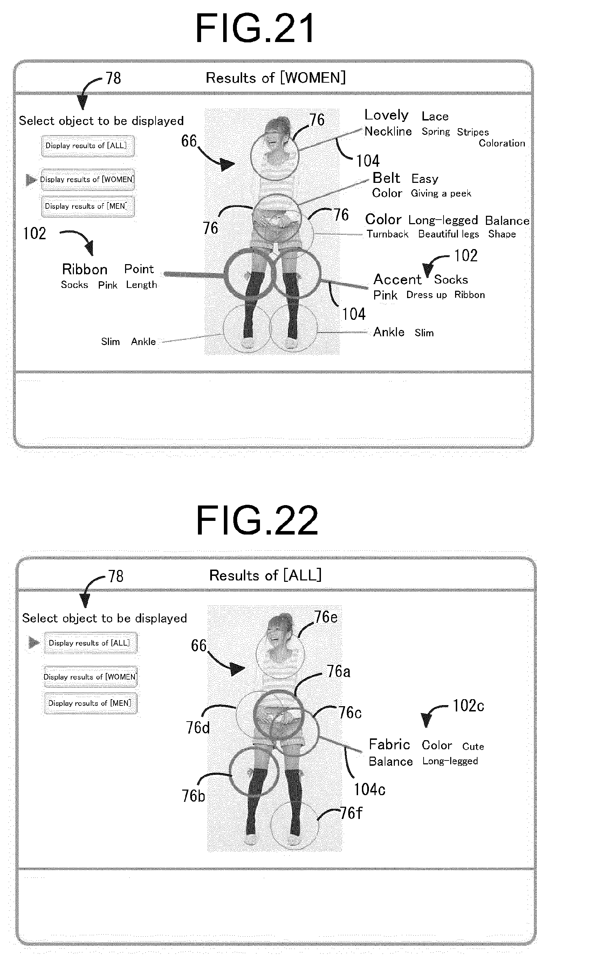

Also, with this embodiment as well, being equipped combining the same functions as those of the first embodiment is as described previously, and for example as shown in FIG. 21, with it being possible to do the subject attribute selection operation using the selection button 78 displayed on the screen, it is possible to obtain each type of investigation result by suitably changing the subject of market evaluation (information that is subject to the calculation process) with those selection results reflected. Specifically, FIG. 20 shows an example of a screen on which is displayed investigation results for which analysis was done for information fetched with all the evaluation subjects as subjects regardless of gender, while on the other hand, FIG. 21 shows an example of a screen on which is displayed investigation results for which analysis was done only for information fetched with only women among the evaluation subjects as subjects.

Furthermore, with this embodiment, by performing selection and input of only specific components of interest to focus on using the component of interest display selection input unit 88 (FIG. 16), it is also possible to display on the screen only language input for those components of interest. In specific terms, by selecting only for example specific component of interest 76c using a pointer operation on the screen, as shown by example in FIG. 22, only the language 102c corresponding to that component of interest 76c is displayed, and it is possible to eliminate from the screen the display of language information corresponding to the other components of interest that were not selected. By doing this, for example even when there is a large number of screen displays of components of interest, or number of screen displays of language corresponding to each component of interest, or the screen is small, or understanding the information using language is difficult, it is possible to make the language information easy to understand by selecting and displaying only language corresponding to the specified components of interest.

As described above, according to the market investigation analysis device as the second embodiment of the present invention, by the general consumer who is the evaluation subject freely indicating the part he is interested in (component of interest) using only his own sensibilities, it is possible to avoid to the extent possible the influence of experts and the like, and to efficiently fetch evaluation information reflecting the honest sensibilities of the general consumer, and it is possible to exhibit the same technical effects as those of the first embodiment of being able to display on the screen evaluation results reflecting that in a format that can easily and efficiently be recognized and understood and the like.

In addition to that, with this embodiment, in addition to the same overall evaluation information and component of interest information as that of the first embodiment as the evaluation information of the evaluation object by the evaluation subject, language information is also fetched together. Then, the fetched language information is tallied for each component of interest, and by displaying on the screen the language information with a large input count, this is reflected in the evaluation results, and by doing that, it is possible to more accurately acquire evaluation results by using language to understand the sense of the evaluation subject in relation to the evaluation object.

In particular with this embodiment, a big feature here is that as the language information for evaluating the evaluation object, rather than language prepared in advance to direct someone such as in a conventional survey or the like, language as expressed according to the evaluation subject's own free sensibility is used without providing limits of any kind in a state of simply displaying the overall image of the evaluation object. In this way, with freely expressed language as the subject, finding the commonality of that makes it possible to understand the honest sensibilities of general consumers rather than experts as investigation results.

In fact, with this embodiment, by expressing sensibilities by the general consumer's free indication of components of interest and free language expression relating to those components of interest, while ensuring qualitative reliability compared with a quantitative investigation, by using as subjects a very large number of general consumers with information gathering and calculation processing using computers, it is possible to ensure quantitative and objective reliability using a volume of information that is comparable to a quantitative investigation.

Furthermore, with this embodiment, for each language associated with a component of interest and displayed on a screen, since it is possible to display on the screen the input count level (frequency) together, the person viewing the investigation results display screen is able to understand the differences in the importance level (frequency) between each component of interest together while accurately understanding each component of interest of the evaluation object. Because of that, it is possible to understand the abstract and subjective senses held by the general consumer with language as the medium for each component of interest, and to recognizes by the senses the accuracy and depth of that understanding with the frequency of each language input for that component of interest as the index.

With this embodiment, in FIG. 19 to 22, for evaluation subjects who replied "Like" as the overall evaluation, the position information is fetched with the "Parts I Like" as the components of interest, and the "Reason I Liked It" is fetched as the language information, and we showed an example of investigation results for which analysis processing was performed based on that collected information, but similarly, for evaluation subjects who replied "Dislike" as the overall evaluation, it is also possible to fetch position information with the "Parts I Dislike" as the components of interest, and to fetch the "Reason I Dislike It" as the language information, and to obtain investigation results for which analysis processing is performed based on those collected information. Those kinds of investigation results are beneficial information when improving designs or the like, for example. Also, similarly, it is possible to use the intermediate evaluation layer of "Somewhat Like," "Somewhat Dislike" or the like as the overall evaluation as the subject, or to perform analysis processing in a two-choice manner including both "Like" and "Somewhat Like" or the like.

Also, when inputting language information, there is also concern about the problem of the labor burden for the evaluation subjects, but with this embodiment, that point was also considered, and it has been made easy for each evaluation subject to reply. Specifically, at first, the evaluation object overall image 66 is shown to the evaluation subject, and at that stage, focusing on making it easy to perform the evaluation by one's own senses at the level of "Like/Dislike" for that evaluation object, fetching of the overall evaluation results is performed at the starting stage of step (S4), and after that, particularly for the liked parts (components of interest), the evaluation subject is asked to narrow his focus by his own effort (operation) (S5). After that, again, for those components that were focused on, questions are asked of the reasons and the like, and by having them do text input, the evaluation subject text input can be performed relatively easily. Specifically, if replying "Site I Like" or "Site I Dislike" within the overall image, this is relatively easy, because it is easier for words for evaluating those sites to come out naturally after specifying oneself the "Site I Like" or "Site I Dislike."

Furthermore, with this embodiment, when fetching language information (step S5-1), it is possible for the evaluations subjects to input language freely with this embodiment, but even when language information is collected using a method that is a totally free language input, for the language input in a state seeing the image 66 showing the same evaluation object, particularly when the investigation is performed at a scale exceeding several thousand evaluation subjects, the existence of a standard enumeration rate that can be processed quantitatively has already been confirmed by the inventors. In that case, from the purpose of fetching language information that can be processed more efficiently and more precisely, as shown by example in FIG. 19, it is effective to stipulate an upper limit for the number of characters of the input language information. With this embodiment, using a keyword format expressed using character strings of 12 characters or less, inputting of three text information is done respectively in the dialog boxes on the screen.

Also, due to reasons such as there being a low reply count (number of evaluation subjects), or there being a high input character count or the like, there are also cases when the enumeration rate of the same character string (language) is low. In such a case, using thesaurus data, it is possible to do integrated notation of synonyms for the input language, but from the perspective of the precision of the evaluation results faithfully reflecting the sensibilities of the evaluation subjects, this is not necessarily the ideal method. It is more ideal to use a morphological analysis means. The morphological analysis means itself has been known from the past, and for example as software operated on a general use personal computer as a Japanese morphological analysis system, it is possible to obtain "JUMAN" or "CHASEN" or the like under the copyright of the Nagao Research Laboratory of Kyoto University Engineering Department and the Matsumoto Research Laboratory of Nara Institute of Science and Technology or the like, for example, and it is possible to use those kinds of various types of morphological analysis systems that are available to the public, so here, we will omit a detailed description. Naturally, when fetching the language of this embodiment using a morphological analysis system, it is desirable to eliminate from the subject only parts of speech specifying "particles" or the like. This is because particles and the like do not constitute qualitative information of the evaluation object.

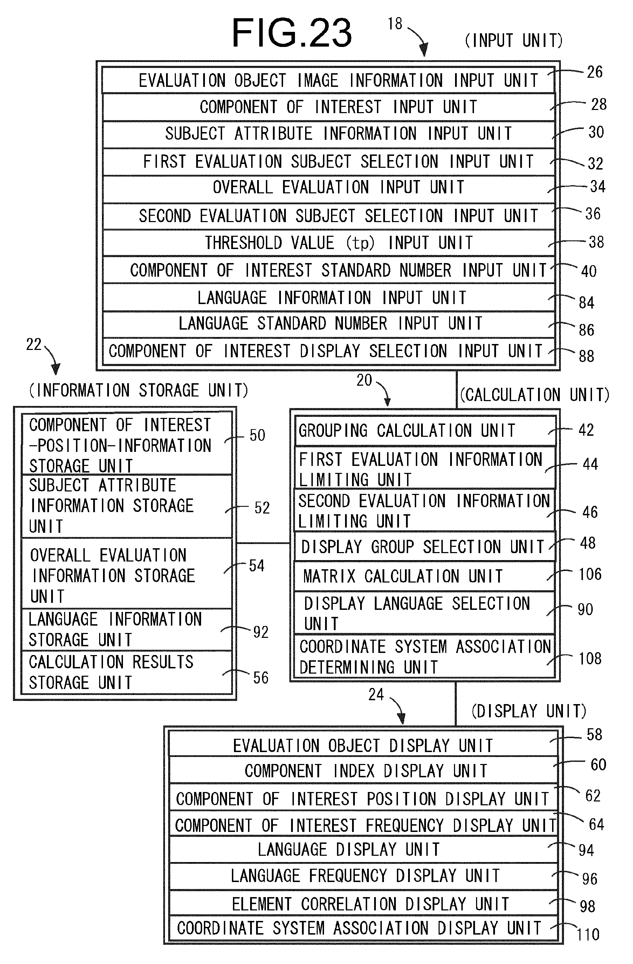

Furthermore, we will describe the market evaluation investigation device and investigation method as the third embodiment of the present invention while referring to FIG. 23 to 31. This embodiment is the investigation device and investigation method of the second embodiment, wherein the investigation results are provided as visual information by generating a calculation matrix (data matrix) with the overall evaluation information and language information fetched for that plurality of evaluation objects as elements, and by associating and displaying each information on a two dimensional screen using a specific positional relationship by doing singular value decomposition of that calculation matrix and dimensionally compressing it. We will omit overlapping explanations for the same constituent parts as those of the second embodiment.

Specifically, as is clear from the schematic diagram of the hardware configuration shown in FIG. 23, compared to the investigation device of the second embodiment, the investigation device of this embodiment is additionally equipped on the calculation unit 20 with a matrix calculation unit 106 as the display matrix calculation means for generating the calculation matrix and doing calculation processing, and a coordinate system association determining unit 108 for selectively determining the image and language information associated with the coordinate system and displayed on the screen, and the display unit 24 is additionally equipped with a coordinate system association display unit 110 as the coordinate system association display means.

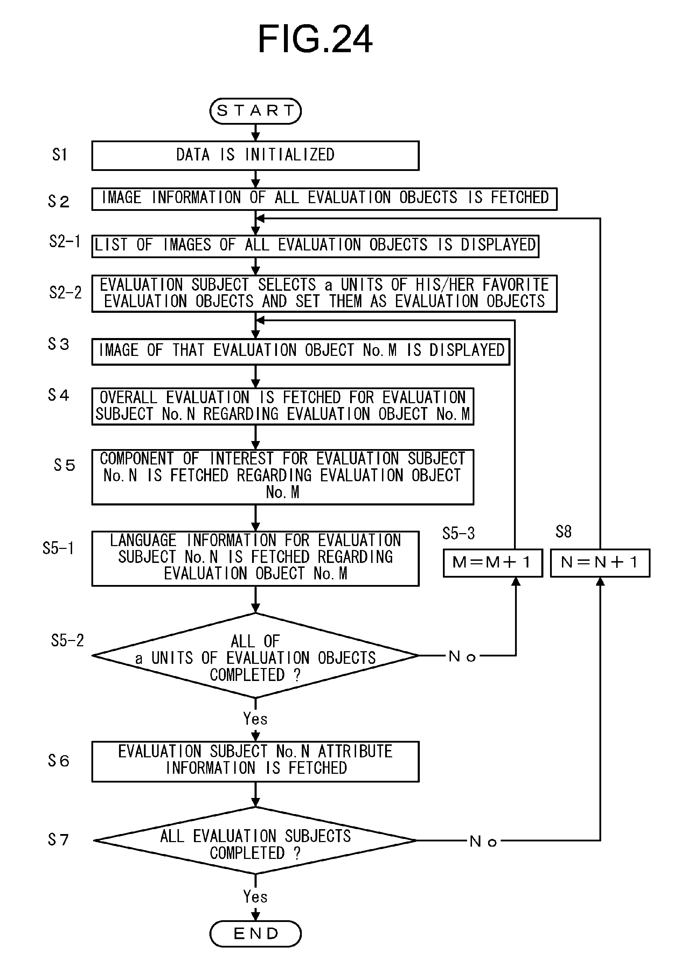

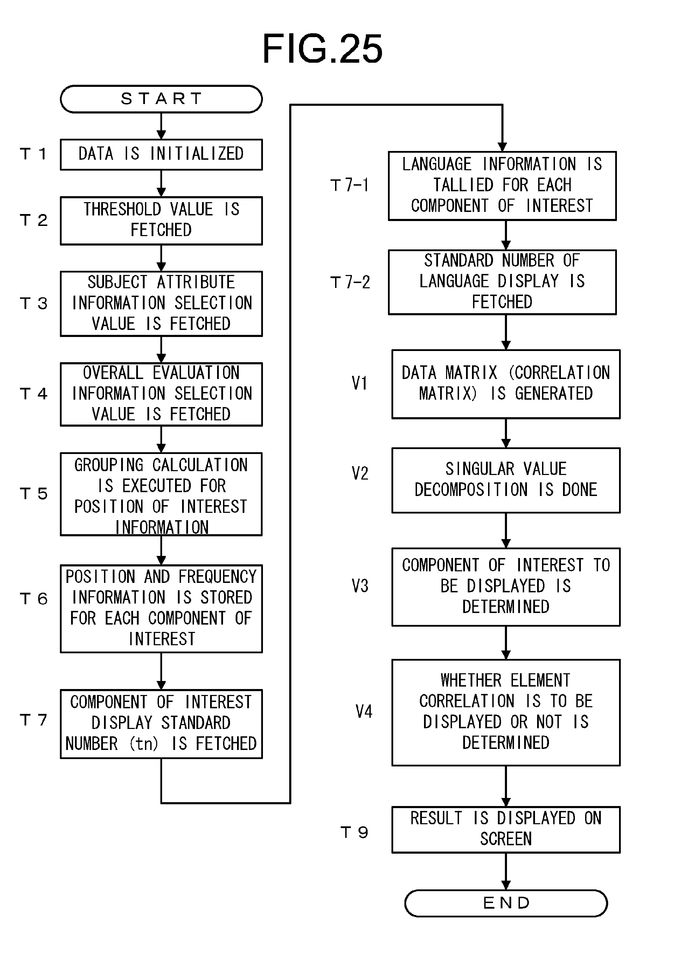

Then, with this embodiment, the same as with the second embodiment, after executing the fetching process of each type of information such as the overall image, components of interest, language and the like according to the flow chart in FIG. 24, the calculation analysis process is executed according to the flow chart in FIG. 25. With this calculation analysis process, with the second embodiment, based on information such as the components of interest fetched at steps T2 to T7 in FIG. 18, the position of the components of interest were displayed on the screen and the corresponding language was correlated to each component part and this was displayed on the screen in subsequent steps T8 and T9, but with this embodiment, as shown in FIG. 24, the information fetching at steps T2 to T7 is the same, but after that, rather than simply displaying on the screen language corresponding to the position of the component of interest, by executing a specific calculation process at steps V1 to V4, displaying on the screen (step T9) is done by finding the specific position in the dimensional area in which the fetched component of interest or language information is displayed on the screen.

Also, the information calculation analysis process according to this embodiment is used more optimally for a case when investigating a market evaluation simultaneously for three to several tens of a plurality of evaluation objects more than when investigating a market evaluation having as the subject one or two evaluation objects, so with the description below, as represented in the flow chart in FIG. 24, as the evaluation object, shown by example is a process when investigating a market evaluation simultaneously with a plurality of (e.g. 10 or 20) types of clothing design as the subj ect.

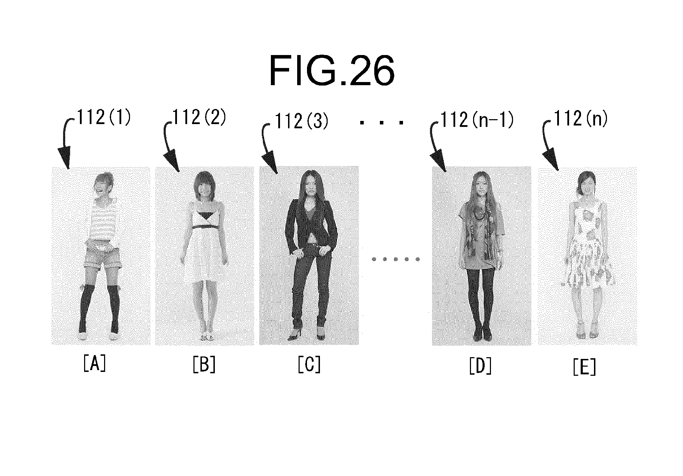

In more detail, with the information fetching process shown in FIG. 24, at step S2, all (n units) the clothing design image information that is subject to evaluation is fetched, and at the subsequent step S2-2, a list of those overall evaluation object images are displayed on the screen. In specific terms, for example as shown in FIG. 26, as the plurality of evaluation object images, the plurality of types of clothing design images 112 (1) to 112 (n) are displayed on the screen. When the number (n) of clothing design images is large, or when the image is large or the like, it is also possible to display a list across a plurality of screens.

Here, for all n types of evaluation objects (clothing designs), it is also acceptable to do information gathering by having them evaluated by all the evaluation subjects, but there is the problem that when the number (n) of clothing designs is too high, the burden on the evaluation subjects is too high. In light of that, with this embodiment, a list of all the clothing designs is displayed at step S2-1, and at the subsequent step S2-2, the evaluation subject selects several of the items he likes among those (e.g. 5) and inputs the selection information, and only the selected a units of clothing designs are set as the evaluation objects for that evaluation subject.

With the a units of clothing designs selected in this way as the evaluation objects, at steps S3 to S5-3, for each clothing design as the respective evaluation object, the same as with the second embodiment, the overall evaluation information, component of interest information, and language information is fetched. Then, after the various information is fetched for all the a units of clothing design, the attribute information of that evaluation subject is fetched at step S6, and information fetching by that evaluation subject is completed.

After that, by loop processing with steps S7 and S8, for all of a plurality of evaluation subjects, by executing the aforementioned steps S2-1 to S6, information fetching by each of the evaluation subjects is executed.

For the evaluation information fetched in this way, though it is not impossible for example for a live human analyst to read and interpret this, when the number of evaluation objects becomes large, an extremely large amount of labor and time is required by the analyst, and also, having the analyst's individual subjective view enter the analysis results is unavoidable. In light of that, with this embodiment, according to the flow chart shown in FIG. 25, the analysis results are displayed as visual information on a screen by implementing a calculation process on the fetched evaluation information using linear algebra. The principal of the method of obtaining visual information by associating to a low dimension coordinate system reflecting the mutual correlation of elements which are a large number of information having some kind of mutual qualitative relationship in this way is described as shown in a specific example below for which the detailed description (particularly [0042] to [0045]) of Patent No. 3335602, which received patent approval and was applied for with priority by this applicant, is used as the first embodiment applied to the present invention.

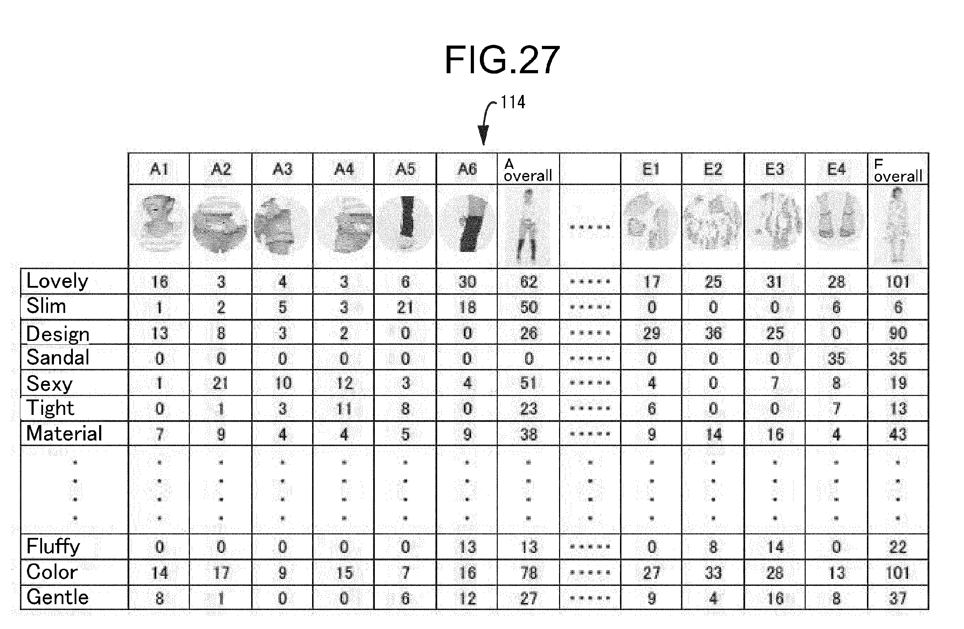

In specific terms, at steps ST-1 to T7-2 in FIG. 25, the same as with the second embodiment, the component of interest position grouping process or the like is executed, and also at steps V1 to V4, visual information is generated on the screen based on each type of fetched information. Specifically, at step V1, data matrix 114 shown in FIG. 27 is generated. This data matrix 114 is a multidimensional matrix that uses as elements each value of the frequency distribution, represented with the component images representing each position of the components of interest that are the component of interest-position-information as the row items, and the language which is language information as column information. Particularly with this embodiment, an overall image of the evaluation object is added to the same row item as the component of interest-position-information, and the total value of each frequency of the language used as an element of the multidimensional matrix is used as an element of the overall image.

Said another way, with the data matrix 114 shown in FIG. 27, this is a matrix for which, for the language of the "Reason I Like That Site" listed in each row, for each component of interest, the number of how many people that reason is listed (frequency) is stored as an element. Also, the total value of the number of people from [A1] to [A6] are input as elements in the [A Overall] column. In other words, the item for which all the components used as components of interest for that clothing design is used as the overall item. Then, by doing singular value decomposition for this data matrix 114, it is possible to organize and display the relationship between a plurality of clothing designs on a two dimensional space.

Specifically, with the data matrix 114, based on the mutual relative relationship between a plurality of evaluation objects and components of interest, this is a correlation matrix as a multidimensional matrix representing the relationship of the plurality of evaluation objects and components of interest with a large number of language (morphemes) as the overall item. Then, the display matrix obtained by dimensionally compressing this data matrix is converted to a display matrix on a representation space for which a suitable number of dimensional axes (with this embodiment, two dimensions) used as coordinate axes are expressed using a coordinate system, and with this coordinate system as a representation space, at least a portion of the relationship of the qualitative information of those is displayed in a state replaced as a physical positional relationship with the coordinate system.

Here, this data matrix 114 is a high order item having a great many characteristic dimensional axes, so to project this in a representation space having a low order of dimensional axes for which the substance of the relationship does not change, preferably a representation space of two dimensions or three dimensions, a method is used that uses the singular value decomposition (S.V.D.) noted above. Specifically, the data matrix 114 uses image data for which evaluation objects and components of interest can be specified as the column items, and also uses all the language fetched for those image data as the row items, and each value of the frequency distribution of the language correlated with each image data is obtained as an element, so this data matrix 114 is generated using a number of columns in the amount of image data corresponding to the number of evaluation objects and components of interest, and the number of rows in the amount of all the language types fetched for each component of interest. With this data matrix, even when the row items and column items are exchanged, there is no effect on the analysis results. Then, when doing dimensional compression of this correlation matrix, first, when the correlation matrix is set with an I row and J column matrix as X, as shown with the formula below, a profile matrix P is found having the element $p_{ij}$ for which each element $x_{ij}$ of this correlation matrix X is divided by the sum N.

[Formula 1]

$$p_{ij} = x_{ij} / N$$

however,

$$N = \sum_{i=1}^{I} \sum_{j=1}^{J} x_{ij}$$

Next, as shown by the formula below, by implementing a similar process to chi-square conversion on each element $p_{ij}$ of this profile matrix P, a process matrix A having elements $a_{ij}$ converted based on the separation degree of each element of that profile matrix in relation to the expected values is obtained.

[Formula 2]

$$a_{ij} = (p_{ij} - r_i c_j) / \sqrt{(r_i c_j)}$$

however,

$$r_i = R_i / N$$

$$c_j = C_j / N$$

$$R_i = \sum_{j=1}^{J} x_{ij}$$

$$C_j = \sum_{i=1}^{I} x_{ij}$$

Then, singular value decomposition is implemented on the process matrix A obtained in this way. Specifically, when the matrix obtained using the pre-processing as described previously is used as the I row J column process matrix A, it is possible to do singular value decomposition as noted in the formula below for this process matrix A.

$$A = UDV^T$$

U is an I row k column matrix, where D is a k row k column diagonal matrix, V is a J row k column matrix, and the superscript T indicates a transposed matrix. Also, with this formula, the k column vectors of the I dimension with the matrix U are $(u_1, u_2, u_3, ... u_k)$, and the k column vectors of the J dimension of the matrix V are $(v_1, v_2, v_3, ... v_k)$, and also, when the matrix D diagonal elements $(d_{11}, d_{22}, d_{33}, ... d_{kk})$ are $d_1 \geq d_2 \geq d_3 \geq ... \geq d_k$, the following formula is established. The matrix D diagonal elements are $d_1 \geq d_2 \geq d_3 \geq ... \geq d_k > 0$, and doing this is easy.

[Formula 3]

$$A \;=\; d_1\,Q_1 \;+\; d_2\,Q_2 \;+\; d_3\,Q_3 \;+\; \cdots \;+\; d_k\,Q_k$$

However, $Q_s = u_s\, v_s^T$ (where s is an integer from 1 to k)

Therefore, from the formula above, matrix A becomes a linear sum of matrix Q, and the characteristic vector corresponding to a large singular value represents the matrix A well. Because of that, by taking in only a suitable number of the singular values from the upper level, it is possible to obtain a low order display matrix U*, V* by converting to a representation space with a low characteristic dimension count from the high order data matrix 114 having a high characteristic dimension count as described previously.

Then, the data of the display matrix obtained in this way is stored in the calculation results storage unit 56 of the information storage unit 22. It is also possible to implement post-processing by adjusting the relative weighting of each dimension axis direction as necessary for the display matrix obtained in this way. In specific terms, it is possible to do adjustment by multiplying a matrix suitably weighted in each dimension axis direction on the display matrix U*, V* obtained with a suitable number of dimensions. It is possible to suitably use a singular value corresponding to each dimension axis for this weighting, for example.

Also, when the display matrix is found with the calculation process with steps V1 and V2, and each element is associated with the coordinate system based on that display matrix, it is possible to display all the elements, but when there are too many display elements, there is the risk of it being difficult to do the display on the screen or to understand it. In that case, at step V3, it is desirable to suitably narrow down the elements (image, component image, language) displayed on the screen. For example, it is also possible to display on the screen only the component of interest images or language having a frequency of a standard number or above based on the standard number fetched at step T7 or T7-2.

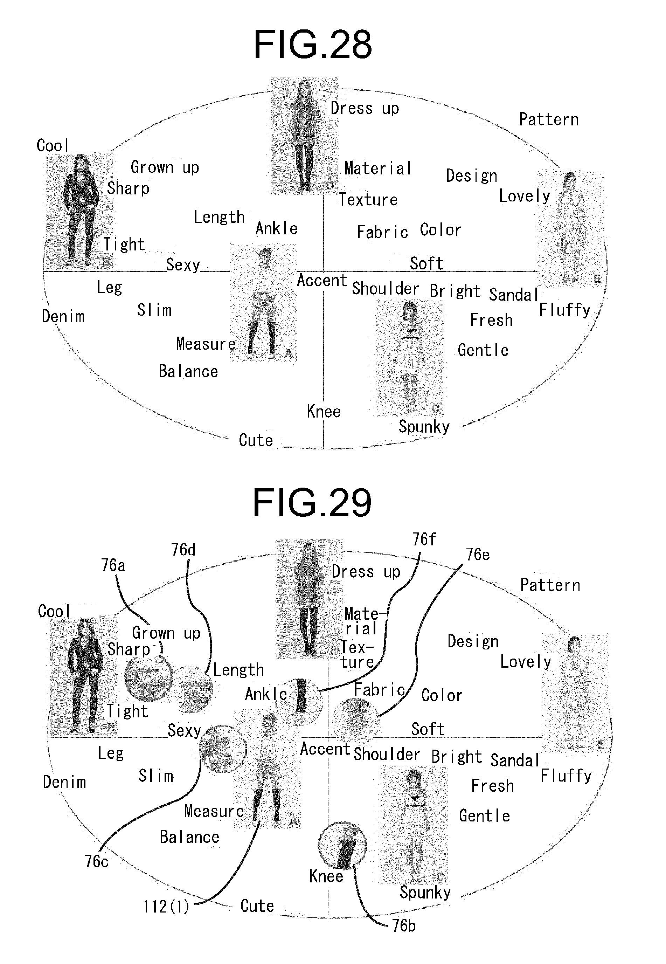

In this way, the investigation results displayed on the screen at step T9 are the items shown in FIG. 28 and FIG. 29, for example. Specifically, each information of the overall image which is the evaluation object and the component of interest image and the language input in relation to that component of interest image is displayed with their mutual correlation as the position on the representation space reflecting their mutual correlation based on the display matrix obtained with the matrix calculation. That display, for example, is performed by visibly displaying each image and each language (morpheme) in the position specified by the coordinate values represented as each element of the display matrix with the orthogonal coordinate system of a low order (with this embodiment, two dimensions) for which each dimension axis is a coordinate axis with the display matrix dimensionally compressed with the singular value decomposition described above. As the display device, a printer or display or the like that can visibly display a two dimensional or three dimensional orthogonal coordinate system can be suitably used. Also, when doing display, it is preferable to select the objects to be displayed on the coordinate system and make it possible to list roughly all the images and language.

Therefore, by displaying on the screen the display matrix generated using the calculation process described above as the investigation results, a conceptual space for organizing a large number of clothing designs 112 (1 to n) is automatically generated, and it is possible to make this visible in a form for which the relationship between the plurality of clothing design and the correlation between the language as reason items can be intuitively understood. At that time, there is absolutely no need for a person to think of things such as whether the clothing designs can be suitably classified or the like regardless of the coordinate axis used (coordinate axis with what kind of meaning).

Incidentally, when observing the investigation results screen shown in FIG. 28, we can see that clothing designs liked for similar reasons are organized in a similar direction seen from the center original point. For example the left and right direction is a direction that distinguishes the left side "Sharp" clothing designs and the right side "Lovely" type clothing designs, and we could also say this is a comparison between the left side "Tight" and "Cool" designs and the right side "Fluffy" and "Soft" taste. Also, vertically, the top is "Dress up" and "Grown up," whereas the bottom is "Spunky" and "Cute" with a youthful image. In this way, this screen display could make it possible to understand whatever kind of variety clothing designs have, organized with the angle differences in the clockwise direction.

In this way, according to this embodiment, the "Structural Relationship Between a Plurality of Clothing Designs" that goes beyond the evaluation of individual clothing designs does not require any kind of advance knowledge or reference information, and can be visualized simply from the data in matrix A.

Also, in the display screen of FIG. 28, the components of each clothing design are not displayed, but each component is included in the column of matrix A, so the position of each component within this space is also calculated. As an example, when the six components of interest 76a to f (see FIG 20) selected by the evaluation subject (respondent) with the clothing design (evaluation object) 112 (1) are displayed on the screen, they are as shown in FIG. 29.

When observing this FIG. 29, each component of interest 76a to f is displayed regardless of the physical arrangement of components of interest (normally, the head is on top and the legs are on the bottom) such as that the leg site diagram 76f which is a component of interest is at the upper right of the overall image 112 (1). This is because, as is clear from the description above, each component of interest 76a to f is placed at the position of the image representing that part. We can see that the three component of interest diagrams 76a, d, and c in the midriff area are at the left side, in other words, in the "Tight" and "Sharp" direction. In other words, of the "Clothing Design 112 (1)," if the focus is only on the part around the midriff area, we can see that the impression of being "Sharp" is even stronger. On the other hand, the component of interest 76d of the red ribbon at the sock knee represents "Cute" and "Spunky" youth on the bottom side, and the component of interest 76e around the neck is slightly to the right, specifically, expresses the "Soft" direction. In other words, even with the same one clothing design, the image is slightly different for each site, and as an item that synthesizes those, we can see the state of the "Overall" position of the "Clothing Design A" 112 (1) which is the evaluation object being decided. Naturally, there is a natural conclusion that the position of the [A Overall] is the gravity center position of [A1] to [A6] because the total value of [A1] to [A6] during formation of the matrix A is stored in the [A Overall] column (component linear sum). This is the same as when Picasso decomposed an object into fundamental elements and reconstituted them using that concept to express Cubism, with each site diagram organizing the variety of clothing designs in a two dimensional space, and is somewhat easy to understand if thought of as an item which is reconstituted at a position representing each individual concept. When drawing a Cubism picture, a highly gifted painter was necessary, but the concept space map of the present invention is logically and automatically generated by calculation from the data matrix. In fact, the only item prepared in advance is the overall photograph of each clothing design, and "Which Component" to cut and separate as a component of interest, and furthermore, enumerating the "Reason" for liking that component of interest can also be done according to the free will of all the respondents (general consumers).

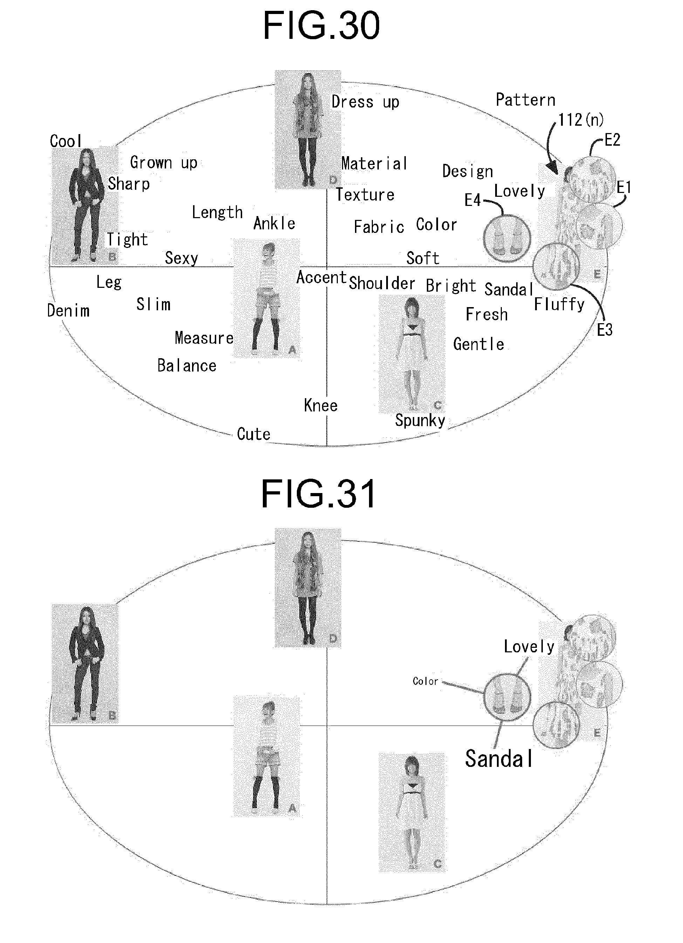

Subsequently, FIG. 30 shows the item for which the arrangement of the component diagrams of the "Clothing Design E" 112 (n) which is one of the evaluation objects is displayed.

Compared to the case of "Clothing Design A" 112 (1) shown in FIG. 23 previously, we can see that all of the component of interest images (diagrams) are gathered in a relatively narrow range. From this, with the "Clothing Design A" 112 (1), different image parts such as the midriff area and knee ribbon are combined to complete the whole, but with the "Clothing Design E" 112 (n) this time, we can see that the impression is almost the same for each of the components of interest. In this way, for one clothing design, even with a difference to the extent of whether it is an item constituted from a combination of elements (components) provoking a large number of different impressions, or is an item constituted from a combination of elements (components) provoking similar impressions, it is possible to visualize the investigation results on the display screen.

With this screen display shown in FIG. 30, in terms of something strong, only the red shoes [E4] component is slightly to the left side, specifically, it is arranged at the "Sharp" side, so only the shoes have a slightly different image, and it is possible to easily read the situation that the shoes play an accent role for a uniform clothing design.

Also, with this embodiment, on the display screen, when a selection operation such as a click or the like is done on the display location of the red shoes [E4], as shown in FIG. 31, a number of the top items of language listed as the reasons for liking this component of interest are made to be displayed with a larger font the higher the item is. In other words, the click operation of the display location is considered to be the selection operation input of the screen display contents (with this embodiment, whether or not language information is displayed), and by that operation input being done, language corresponding to the selected component of interest is made to be displayed on the screen.

By observing this language information, we can see that with a linear sum of reasons such as "Sandal," "Lovely," "Color" or the like, the red shoe component of interest diagram (image) is created (associated). Using this display, "Lovely" has more of a right side a meaning in the concept space displayed on the screen, and "Sandal" can be visualized as being an element having lower side characteristics. Specifically, even with the display screen of the investigation results with the second embodiment (see FIG. 22), in addition to the meaning that the component of interest has, it was possible to recognize the difference in importance level that each reason has (by the number of persons who input that), but with this embodiment, it is further possible to objectively realize even the background of the meaning (language) that each component of interest has.

Above, we gave a detailed description of the embodiments of the present invention, but the present invention can be implemented in modes with the addition of various modifications, edits, improvements and the like based on the knowledge of persons skilled in the art, and those kinds of various modes are all included in the technical scope of the present invention provided they do not stray from the gist of the present invention.

KEYS TO SYMBOLS

26: Object for evaluation image information input unit, 28: Component of interest input unit, 30: Subject attribute information input unit, 32: First evaluation subject selection input unit, 34: Overall evaluation input unit, 36: Second evaluation subject selection input unit, 38: Threshold input unit, 40: Component of interest reference number input unit, 42: Grouping calculation unit, 44: First evaluation information limiting unit, 46: Second evaluation information limiting unit, 48: Display group selection unit, 50: Component of interest-position-information storage unit, 52: Subject attribute information storage unit, 54: Overall evaluation information storage unit, 56: Calculation result storage unit, 58: Object for evaluation display unit, 60: Component index display unit, 62: Component of interest position display unit, 64: Component of interest frequency display unit

**Claims**

1. A market evaluation investigation device comprising:

    an evaluation object display means for displaying an image of an evaluation object on a screen;
    a component index display means for displaying a component index specifying in partial form the evaluation object on the screen on which the entire image of the evaluation object is displayed;
    a component of interest input means for having the component index moved on the screen and having position information of component of interest input;
    an information storage means for storing component of interest-position-information input by the component of interest input means, respectively fetched by a plurality of evaluation subjects regarding the evaluation object;
    a grouping calculation means for grouping together items for which the positions of the components of interest are close, with the component of interest-position-information stored in the information storage means as the subject;
    a component of interest position display means for displaying on the screen the positions of the components of interest for which the number was made smaller by the component of interest-position-information being grouped by the grouping calculation means;
    a component of interest frequency display means that differentiates a display format of the position of the component of interest according to the number of component of interest-position-information gathered in each component of interest group, regarding the position of each component of interest displayed on the screen by the component of interest position display means.

2. The market evaluation investigation device according to claim 1, further comprising:

    a subject attribute input means by which subject attribute information relating to attributes of the evaluation subject is made to be input is provided;
    a first evaluation subject selection means that stores the subject attribute information input using the subject attribute input means in the information storage means, and selects the evaluation subject to be the subject using the subject attribute information stored in the information storage means; and
    a first evaluation information limiting means that selects the component of interest-position-information obtained by the evaluation subject selected using the first evaluation subject selection means from among the component of interest-position-information stored in the information storage means respectively fetched by the plurality of the evaluation subjects regarding the same evaluation object;
    wherein processing is executed using the grouping calculation means with the component of interest-position-information selected using the first evaluation information limiting means as the subj ect.

3. The market evaluation investigation device according to claim 1 or 2, further comprising:

    an overall evaluation input means for inputting a selection made from a plurality of choices of overall evaluation information relating to the evaluation object prepared in advance, the overall evaluation information inputted by the overall evaluation input means being stored in the information storage means;
    a second evaluation subject selection means for selecting evaluation subjects using the overall evaluation information stored in the information storage means; and

a second evaluation information limiting means for selecting the component of interest-position-information obtained by the evaluation subject selected using the second evaluation subject selection means from among the component of interest-position-information stored in the information storage means fetched respectively by the plurality of evaluation subjects regarding the same evaluation object,

wherein processing by means of the grouping calculation means is executed with the component of interest-position-information selected by the second evaluation information limiting means as the subj ect.

4. The market evaluation investigation device according to any one of claims 1-3, wherein the grouping calculation means includes a grouping threshold value setting means that changes a threshold value which is a maximum separation value of the component of interest-position-information gathered in the same group.

5. The market evaluation investigation device according to any one of claims 1-4, wherein the grouping calculation means includes a display group selection means that selects only groups for which the number of the component of interest-position-information gathered in the same group exceeds a preset standard number, and displays on the screen the component of interest with the component of interest position display means.

6. The market evaluation investigation device according to any one of claims 1-5, further comprising: a language information input means for inputting a language expressing a reason for the component of interest input with the component of interest input means; a language display means for storing language information input using the language information input means respectively fetched by a plurality of evaluation subjects for the same evaluation object in the information storage means, and displaying on the screen together with the component of interest the language input using the language information input means; a display language selection means for determining the language to display on the screen using the language display means by selecting only the language input by a number that exceeds a preset standard number among the language input using the language information input means; and a language frequency information display means for differentiating the display format of the component of interest according to the number of inputs of each language for each language displayed on the screen with the language display means.

7. The market evaluation investigation device according to any one of claims 1-6, further comprising: a language information input means for inputting a language expressing a reason for the component of interest input with the component of interest input means; and a display matrix calculation means that, regarding the evaluation object, uses the component of interest-position-information stored in the information storage means and the language information fetched with the language information input means, finds a multidimensional matrix that uses as an element each value of a frequency distribution represented having the component of interest-position-information be either of row items or column items, and the language information be the other of the row items or the column items, and obtains a display matrix for which the multidimensional matrix is dimensionally compressed; and a coordinate system association display means that associates with a coordinate system each component of interest image and each language of the language information of the evaluation object corresponding to the component of interest-position-information based on the display matrix obtained with the display matrix calculation means, and displays this on the screen.

8. The market evaluation investigation device according to claim 7, wherein in the display matrix calculation means, the component of interest-position-information and the language information respectively fetched for a plurality of the evaluation objects are consolidated into one multidimensional matrix, and the display matrix is found from the multidimensional matrix.

9. The market evaluation investigation device according to claim 7 or 8, wherein in the display matrix calculation means, an overall image of the evaluation object is added to the same row or column item as the component of interest-position-information in the multidimensional matrix, and a total value of each frequency of the language information used as an element of the multidimensional matrix is used as an element of the overall image, while the display matrix is obtained by dimensionally compressing the multidimensional matrix obtained using that, and in the coordinate system association display means, in addition to the component of interest image and the language, the overall image is also associated with the coordinate system, and is displayed on the screen.

10. The market evaluation investigation device according to claim 9, wherein the coordinate system association display means includes a display selection means of the component of interest image that selectively hides the display of the component of interest image on the screen.

**11.** The market evaluation investigation device according to any one of claims 7-10, further comprising an element correlation display means which, by correlating each item of the component of interest-position-information in the multidimensional matrix with each language of the language information used as an element of each of the items and displaying this on the screen, displays the correlation of the component of interest image and each language displayed on the screen with the coordinate system association display means.

**12.** A market evaluation investigation method comprising:

an evaluation object display step of a computer displaying an image of an evaluation object on a screen;
a component of interest-position-information fetching step of the computer displaying a component index that indicates in parts the evaluation object on the screen on which the entire image of the evaluation object is displayed, and fetching position information of component of interest by fetching the position information on the screen of the component index moved on the screen by outside input;
a storage step of the computer storing in an information storage means the component of interest-position-information fetched with the component of interest-position-information fetching step;
a grouping calculation step of the computer using the component of interest-position-information stored in the information storage means as the subject, and executing a calculation process that gathers and groups items with nearby positions of the components of interest; and
a display step of the computer displaying on the screen the positions of the components of interest made into a small number by being grouped with the grouping calculation step, and displaying a frequency belonging to each of the components of interest by differentiating the display format of the position of the component of interest according to the number of the component of interest-position-information gathered in each component of interest group.

**13.** The market evaluation investigation method according to claim 12, further comprising:

a language information fetching step of the computer fetching from outside language information constituted from language representing a reason for interest regarding the component of interest;
a storage step of the computer affiliating the language information fetched with the language information fetching step to the component of interest-position-information fetched with the component of interest-position-information fetching step and storing this in the information storage means;
a display matrix calculation step of the computer using the component of interest-position-information and the language information stored in the information storage means, finding a multidimensional matrix using as an element each value of a frequency distribution represented having the component of interest-position-information be either of row items or column items and having the language information be the other of the row items or the column items, and finding a display matrix for which the multidimensional matrix is dimensionally compressed; and
a coordinate system association display step of the computer, based on the display matrix obtained with the display matrix calculation step, associating each component of interest image of the evaluation object corresponding to the component of interest-position-information and each language of the language information with a coordinate system, and displaying that on the screen.

**14.** An information recording medium readable by a computer on which a program is placed for executing on the computer the market evaluation investigation method according to claim 12 or 13.

**15.** A program for executing on a computer the market evaluation investigation method according to claim 12 or 13.

# FIG.1

# FIG.2

18 (INPUT UNIT)

| | |
|---|---|
| EVALUATION OBJECT IMAGE INFORMATION INPUT UNIT | 26 |
| COMPONENT OF INTEREST INPUT UNIT | 28 |
| SUBJECT ATTRIBUTE INFORMATION INPUT UNIT | 30 |
| FIRST EVALUATION SUBJECT SELECTION INPUT UNIT | 32 |
| OVERALL EVALUATION INPUT UNIT | 34 |
| SECOND EVALUATION SUBJECT SELECTION INPUT UNIT | 36 |
| THRESHOLD VALUE (tp) INPUT UNIT | 38 |
| COMPONENT OF INTEREST STANDARD NUMBER INPUT UNIT | 40 |

22 (INFORMATION STORAGE UNIT)

20 (CALCULATION UNIT)

| | |
|---|---|
| COMPONENT OF INTEREST -POSITION-INFORMATION STORAGE UNIT | 50 |
| SUBJECT ATTRIBUTE INFORMATION STORAGE UNIT | 52 |
| OVERALL EVALUATION INFORMATION STORAGE UNIT | 54 |
| CALCULATION RESULTS STORAGE UNIT | 56 |

| | |
|---|---|
| GROUPING CALCULATION UNIT | 42 |
| FIRST EVALUATION INFORMATION LIMITING UNIT | 44 |
| SECOND EVALUATION INFORMATION LIMITING UNIT | 46 |
| DISPLAY GROUP SELECTION UNIT | 48 |

24 (DISPLAY UNIT)

| | |
|---|---|
| EVALUATION OBJECT DISPLAY UNIT | 58 |
| COMPONENT INDEX DISPLAY UNIT | 60 |
| COMPONENT OF INTEREST POSITION DISPLAY UNIT | 62 |
| COMPONENT OF INTEREST FREQUENCY DISPLAY UNIT | 64 |

# FIG.3

START

S1 | DATA IS INITIALIZED

S2 | IMAGE INFORMATION OF EVALUATION OBJECT IS FETCHED

S3 | IMAGE OF THAT EVALUATION OBJECT No. M IS DISPLAYED

S4 | OVERALL EVALUATION IS FETCHED FOR EVALUATION SUBJECT No. N

S5 | COMPONENT OF INTEREST FOR EVALUATION SUBJECT No. N IS FETCHED

S8 | N=N+1

S10 | M=M+1

S6 | EVALUATION SUBJECT No. N ATTRIBUTE INFORMATION IS FETCHED

S7 | ALL EVALUATION SUBJECTS COMPLETED ? — No

Yes

S9 | ALL EVALUATION OBJECTS COMPLETED ? — No

Yes

END

# FIG.4

```
                    ┌─────────────────────────────────┐
                    │            S T A R T             │
                    └─────────────────────────────────┘
                                    │
                                    ▼
    T 1             ┌─────────────────────────────────┐
                    │        DATA IS INITIALIZED       │
                    └─────────────────────────────────┘
                                    │
                                    ▼
    T 2             ┌─────────────────────────────────┐
                    │    THRESHOLD VALUE IS FETCHED    │
                    └─────────────────────────────────┘
                                    │
                                    ▼
    T 3             ┌─────────────────────────────────┐
                    │    SUBJECT ATTRIBUTE INFORMATION │
                    │     SELECTION VALUE IS FETCHED   │
                    └─────────────────────────────────┘
                                    │
                                    ▼
    T 4             ┌─────────────────────────────────┐
                    │   OVERALL EVALUATION INFORMATION │
                    │     SELECTION VALUE IS FETCHED   │
                    └─────────────────────────────────┘
                                    │
                                    ▼
    T 5             ┌─────────────────────────────────┐
                    │ GROUPING CALCULATION IS EXECUTED FOR │
                    │    POSITION OF INTEREST INFORMATION  │
                    └─────────────────────────────────┘
                                    │
                                    ▼
    T 6             ┌─────────────────────────────────┐
                    │ POSITION AND FREQUENCY INFORMATION IS │
                    │  STORED FOR EACH COMPONENT OF INTEREST │
                    └─────────────────────────────────┘
                                    │
                                    ▼
    T 7             ┌─────────────────────────────────┐
                    │ COMPONENT OF INTEREST DISPLAY STANDARD │
                    │       NUMBER (tn) IS FETCHED     │
                    └─────────────────────────────────┘
                                    │
                                    ▼
    T 8             ┌─────────────────────────────────┐
                    │ DISPLAY FORMAT IS DETERMINED FOR COMPONENT │
                    │ OF INTEREST TO BE DISPLAYED AND FREQUENCY │
                    │    OF EACH COMPONENT OF INTEREST  │
                    └─────────────────────────────────┘
                                    │
                                    ▼
    T 9             ┌─────────────────────────────────┐
                    │    RESULT IS DISPLAYED ON SCREEN │
                    └─────────────────────────────────┘
                                    │
                                    ▼
                    ┌─────────────────────────────────┐
                    │             E N D               │
                    └─────────────────────────────────┘
```

# FIG.5

```
                    ┌─────────────────┐
                    │     S T A R T    │
                    └─────────────────┘
                             │
                             ▼
      ┌──────────────────────────────────────────┐
   U1 │ COORDINATE VALUE OF SURFACE AREA CENTER   │
      │  OF EACH COMPONENT INDEX (CIRCLE) IS      │
      │              FETCHED                      │
      └──────────────────────────────────────────┘
                             │
                             ▼
      ┌──────────────────────────────────────────┐
   U2 │ TWO COMPONENTS OF INTEREST SEPARATED BY   │
      │  CLOSEST DISTANCE (dp) ARE SELECTED       │
      └──────────────────────────────────────────┘
                             │
                             ▼
   U3          ╱ d p  >  t p  ╲
             ╱        ?          ╲  ──No──►  U4
            ╲ (t p : GROUPING     ╱          ┌──────────────┐
             ╲  THRESHOLD VALUE) ╱           │ TWO COMPONENT│
              ╲_____╱             │ INDEXES      │
                     │                       │ SEPARATED    │
                    Yes                      │ BY CLOSEST   │
                     ▼                       │ DISTANCE (dp)│
             ┌──────────────┐                │ ARE JOINED   │
             │   E N D      │                │ (POSITION,   │
             └──────────────┘                │ FREQUENCY)   │
                                             └──────────────┘
```

U3: $dp > tp$ ? ( tp : GROUPING THRESHOLD VALUE)

U4: TWO COMPONENT INDEXES SEPARATED BY CLOSEST DISTANCE (dp) ARE JOINED (POSITION, FREQUENCY)

# FIG.6

66

68

How much do you like
this cloth?

Please click the one
closest to your feelings
among the four options
below.

Like    Like Somewhat    Dislike Somewhat    Dislike

# FIG.7

66

Which part of this
cloth do you like?

70

Move the round scooping
out portion of the photo
with a mouse freely,and
circle your most
favorite part.

Press the "confirm this
part" button at the bottom
after you move the circle
to your favorite part.

Confirm this part

# FIG.8

72a

Select the appropriate item to you about three questions below,
then press the "confirm as above" button at the bottom.

72b

[Your sex]
◉ Man
◉ Woman

74a

[Your age]
◉ 10~19 years
◉ 20~29 years
◉ 30~39 years
◉ 40~49 years
◉ 50~59 years
◉ 60~69 years

74b

72c

[Monthly average amount
of clothes expenses]
◉ less than ¥2,000
◉ up to ¥5,000
◉ up to ¥10,000
◉ up to ¥20,000
◉ more than ¥20,000

74c

Pless after selection → Confirm as above

# FIG.9

78

Results of [ALL]

Select object to be displayed

▶ Display results of [ALL]

Display results of [WOMEN]

Display results of [MEN]

66

76e

76f

76c

76a

76b

76d

# FIG.10

Select object to be displayed

Display results of [ALL]

Display results of [WOMEN]

Display results of [MEN]

Results of [WOMEN]

# FIG.11

Select object to be displayed

Display results of [ALL]

Display results of [WOMEN]

Display results of [MEN]

Results of [MEN]

# FIG.12

Results of [ALL]

78

Select object to be displayed

66

▶ Display results of [ALL]

Display results of [WOMEN]

Display results of [MEN]

Ignore the position difference of

10 pixels or less

80

Display 5 % or more pointed out

82

76

76

# FIG.13

Results of [ALL]

78

Select object to be displayed 66

▶ Display results of [ALL]

Display results of [WOMEN]

Display results of [MEN]

Ignore the position difference of

25 pixels or less

80

Display 5 % or more pointed out

82

76

76

# FIG.14

Results of [ALL]

Select object to be displayed

▶ Display results of [ALL]

Display results of [WOMEN]

Display results of [MEN]

Ignore the position difference of
20 pixels or less

Display 3 % or more pointed out

# FIG.15

Results of [ALL]

Select object to be displayed

▶ Display results of [ALL]

Display results of [WOMEN]

Display results of [MEN]

Ignore the position difference of
20 pixels or less

Display 10 % or more pointed out

# FIG.16

18 (INPUT UNIT)

| | |
|---|---|
| EVALUATION OBJECT IMAGE INFORMATION INPUT UNIT | 26 |
| COMPONENT OF INTEREST INPUT UNIT | 28 |
| SUBJECT ATTRIBUTE INFORMATION INPUT UNIT | 30 |
| FIRST EVALUATION SUBJECT SELECTION INPUT UNIT | 32 |
| OVERALL EVALUATION INPUT UNIT | 34 |
| SECOND EVALUATION SUBJECT SELECTION INPUT UNIT | 36 |
| THRESHOLD VALUE (tp) INPUT UNIT | 38 |
| COMPONENT OF INTEREST STANDARD NUMBER INPUT UNIT | 40 |
| LANGUAGE INFORMATION INPUT UNIT | 84 |
| LANGUAGE STANDARD NUMBER INPUT UNIT | 86 |
| COMPONENT OF INTEREST DISPLAY SELECTION INPUT UNIT | 88 |

22

(INFORMATION STORAGE UNIT)

20 (CALCULATION UNIT)

| | |
|---|---|
| COMPONENT OF INTEREST -POSITION-INFORMATION STORAGE UNIT | 50 |
| SUBJECT ATTRIBUTE INFORMATION STORAGE UNIT | 52 |
| OVERALL EVALUATION INFORMATION STORAGE UNIT | 54 |
| LANGUAGE INFORMATION STORAGE UNIT | 92 |
| CALCULATION RESULTS STORAGE UNIT | 56 |

| | |
|---|---|
| GROUPING CALCULATION UNIT | 42 |
| FIRST EVALUATION INFORMATION LIMITING UNIT | 44 |
| SECOND EVALUATION INFORMATION LIMITING UNIT | 46 |
| DISPLAY GROUP SELECTION UNIT | 48 |
| DISPLAY LANGUAGE SELECTION UNIT | 90 |

24 (DISPLAY UNIT)

| | |
|---|---|
| EVALUATION OBJECT DISPLAY UNIT | 58 |
| COMPONENT INDEX DISPLAY UNIT | 60 |
| COMPONENT OF INTEREST POSITION DISPLAY UNIT | 62 |
| COMPONENT OF INTEREST FREQUENCY DISPLAY UNIT | 64 |
| LANGUAGE DISPLAY UNIT | 94 |
| LANGUAGE FREQUENCY DISPLAY UNIT | 96 |
| ELEMENT CORRELATION DISPLAY UNIT | 98 |

# FIG.17

START

S1 | DATA IS INITIALIZED

S2 | IMAGE INFORMATION OF EVALUATION OBJECT
IS FETCHED

S3 | IMAGE OF THAT EVALUATION OBJECT No. M
IS DISPLAYED

S4 | OVERALL EVALUATION IS FETCHED FOR
EVALUATION SUBJECT No. N

S5 | COMPONENT OF INTEREST FOR EVALUATION
SUBJECT No. N IS FETCHED

S8 | N＝N＋1

S10 | M＝M＋1

S5-1 | LANGUAGE INFORMATION FOR EVALUATION
SUBJECT No. N IS FETCHED

S6 | EVALUATION SUBJECT No. N ATTRIBUTE
INFORMATION IS FETCHED

S7 ALL EVALUATION
SUBJECTS COMPLETED ?

No

Yes

S9 ALL EVALUATION
OBJECTS COMPLETED ?

No

Yes

END

# FIG.18

```
                        ┌──────────────────────┐
                        │       START          │
                        └──────────────────────┘
                                   │
                                   ▼
    T 1        ┌──────────────────────────────────┐
               │      DATA IS INITIALIZED          │
               └──────────────────────────────────┘
                                   │
                                   ▼
    T 2        ┌──────────────────────────────────┐
               │      THRESHOLD VALUE IS           │
               │           FETCHED                 │
               └──────────────────────────────────┘
                                   │
                                   ▼
    T 3        ┌──────────────────────────────────┐
               │      SUBJECT ATTRIBUTE            │
               │   INFORMATION SELECTION           │
               │       VALUE IS FETCHED            │
               └──────────────────────────────────┘
                                   │
                                   ▼
    T 4        ┌──────────────────────────────────┐
               │      OVERALL EVALUATION           │
               │   INFORMATION SELECTION           │
               │       VALUE IS FETCHED            │
               └──────────────────────────────────┘
                                   │
                                   ▼
    T 5        ┌──────────────────────────────────┐
               │    GROUPING CALCULATION           │
               │       IS EXECUTED FOR             │
               │     POSITION OF INTEREST          │
               │         INFORMATION               │
               └──────────────────────────────────┘
                                   │
                                   ▼
    T 6        ┌──────────────────────────────────┐
               │  POSITION AND FREQUENCY           │
               │  INFORMATION IS STORED            │
               │  FOR EACH COMPONENT OF            │
               │         INTEREST                  │
               └──────────────────────────────────┘
                                   │
                                   ▼
    T 7        ┌──────────────────────────────────┐
               │  COMPONENT OF INTEREST            │
               │    DISPLAY STANDARD               │
               │  NUMBER (tn) IS FETCHED           │
               └──────────────────────────────────┘
```

LANGUAGE INFORMATION IS
T 7-1   TALLIED FOR EACH
COMPONENT OF INTEREST

STANDARD NUMBER OF
T 7-2   LANGUAGE DISPLAY IS
FETCHED

DISPLAY FORMAT IS
DETERMINED FOR COMPONENT
T 8     OF INTEREST TO BE
DISPLAYED AND FREQUENCY
OF EACH COMPONENT OF
INTEREST

DISPLAY FORMAT IS
DETERMINED FOR LANGUAGE
T 8-1   TO BE DISPLAYED AND
FREQUENCY OF EACH
LANGUAGE

T 9     RESULT IS DISPLAYED ON
SCREEN

END

# FIG.19

66

What part of that do you like?
Also, why do you like?
Fill in three brief points
within 12 characters.

100

Ribbon

Lovely

Pink

70

Press after you
fill in three points → Next

# FIG.20

78　　　　　Results of [ALL]　　　　102c

Select object to be displayed

66

76e

Lovely Fresh
Lace Neckline Gentle

104c　　102a

Display results of [ALL]

Display results of [WOMEN]

76d　　76a

Belt Color Sexy
Healthy Shape

76c 104a　　102c

Display results of [MEN]

102d　　104d

76b

Belt Balance Spunky

102b　　104b

Ribbon Lovely
Point Pink Socks

76f

Fabric Color Cute
Balance Long-legged

104c　　102f

Dress up Ankle Color

104f

# FIG.21

Results of [WOMEN]

78

Select object to be displayed

Display results of [ALL]

Display results of [WOMEN]

Display results of [MEN]

66

76

Lovely  Lace

Neckline  Spring  Stripes

Coloration

104

Belt  Easy

Color  Giving a peek

76

Color  Long-legged  Balance

Turnback  Beautiful legs  Shape

102

Accent  Socks

Pink  Dress up  Ribbon

104

Ankle  Slim

76

102

Ribbon  Point

Socks  Pink  Length

Slim  Ankle

# FIG.22

Results of [ALL]

78

Select object to be displayed

Display results of [ALL]

Display results of [WOMEN]

Display results of [MEN]

66

76e

76a

76c

102c

Fabric  Color  Cute

Balance  Long-legged

104c

76f

76d

76b

# FIG.23  18 (INPUT UNIT)

| |
|---|
| EVALUATION OBJECT IMAGE INFORMATION INPUT UNIT — 26 |
| COMPONENT OF INTEREST INPUT UNIT — 28 |
| SUBJECT ATTRIBUTE INFORMATION INPUT UNIT — 30 |
| FIRST EVALUATION SUBJECT SELECTION INPUT UNIT — 32 |
| OVERALL EVALUATION INPUT UNIT — 34 |
| SECOND EVALUATION SUBJECT SELECTION INPUT UNIT — 36 |
| THRESHOLD VALUE (tp) INPUT UNIT — 38 |
| COMPONENT OF INTEREST STANDARD NUMBER INPUT UNIT — 40 |
| LANGUAGE INFORMATION INPUT UNIT — 84 |
| LANGUAGE STANDARD NUMBER INPUT UNIT — 86 |
| COMPONENT OF INTEREST DISPLAY SELECTION INPUT UNIT — 88 |

22

(INFORMATION STORAGE UNIT)   20   (CALCULATION UNIT)

| |
|---|
| COMPONENT OF INTEREST -POSITION-INFORMATION STORAGE UNIT — 50 |
| SUBJECT ATTRIBUTE INFORMATION STORAGE UNIT — 52 |
| OVERALL EVALUATION INFORMATION STORAGE UNIT — 54 |
| LANGUAGE INFORMATION STORAGE UNIT — 92 |
| CALCULATION RESULTS STORAGE UNIT — 56 |

| |
|---|
| GROUPING CALCULATION UNIT — 42 |
| FIRST EVALUATION INFORMATION LIMITING UNIT — 44 |
| SECOND EVALUATION INFORMATION LIMITING UNIT — 46 |
| DISPLAY GROUP SELECTION UNIT — 48 |
| MATRIX CALCULATION UNIT — 106 |
| DISPLAY LANGUAGE SELECTION UNIT — 90 |
| COORDINATE SYSTEM ASSOCIATION DETERMINING UNIT — 108 |

24   (DISPLAY UNIT)

| |
|---|
| EVALUATION OBJECT DISPLAY UNIT — 58 |
| COMPONENT INDEX DISPLAY UNIT — 60 |
| COMPONENT OF INTEREST POSITION DISPLAY UNIT — 62 |
| COMPONENT OF INTEREST FREQUENCY DISPLAY UNIT — 64 |
| LANGUAGE DISPLAY UNIT — 94 |
| LANGUAGE FREQUENCY DISPLAY UNIT — 96 |
| ELEMENT CORRELATION DISPLAY UNIT — 98 |
| COORDINATE SYSTEM ASSOCIATION DISPLAY UNIT — 110 |

# FIG.24

START

S1 — DATA IS INITIALIZED

S2 — IMAGE INFORMATION OF ALL EVALUATION OBJECTS IS FETCHED

S2-1 — LIST OF IMAGES OF ALL EVALUATION OBJECTS IS DISPLAYED

S2-2 — EVALUATION SUBJECT SELECTS a UNITS OF HIS/HER FAVORITE EVALUATION OBJECTS AND SET THEM AS EVALUATION OBJECTS

S3 — IMAGE OF THAT EVALUATION OBJECT No.M IS DISPLAYED

S4 — OVERALL EVALUATION IS FETCHED FOR EVALUATION SUBJECT No.N REGARDING EVALUATION OBJECT No.M

S5 — COMPONENT OF INTEREST FOR EVALUATION SUBJECT No.N IS FETCHED REGARDING EVALUATION OBJECT No.M

S5-1 — LANGUAGE INFORMATION FOR EVALUATION SUBJECT No.N IS FETCHED REGARDING EVALUATION OBJECT No.M

S5-2 — ALL OF a UNITS OF EVALUATION OBJECTS COMPLETED ? — No

S5-3 — $M = M + 1$

S8 — $N = N + 1$

Yes

S6 — EVALUATION SUBJECT No.N ATTRIBUTE INFORMATION IS FETCHED

S7 — ALL EVALUATION SUBJECTS COMPLETED ? — No

Yes

END

# FIG.25

START

T 1 — DATA IS INITIALIZED

T 2 — THRESHOLD VALUE IS FETCHED

T 3 — SUBJECT ATTRIBUTE INFORMATION SELECTION VALUE IS FETCHED

T 4 — OVERALL EVALUATION INFORMATION SELECTION VALUE IS FETCHED

T 5 — GROUPING CALCULATION IS EXECUTED FOR POSITION OF INTEREST INFORMATION

T 6 — POSITION AND FREQUENCY INFORMATION IS STORED FOR EACH COMPONENT OF INTEREST

T 7 — COMPONENT OF INTEREST DISPLAY STANDARD NUMBER (tn) IS FETCHED

T 7-1 — LANGUAGE INFORMATION IS TALLIED FOR EACH COMPONENT OF INTEREST

T 7-2 — STANDARD NUMBER OF LANGUAGE DISPLAY IS FETCHED

V1 — DATA MATRIX (CORRELATION MATRIX) IS GENERATED

V2 — SINGULAR VALUE DECOMPOSITION IS DONE

V3 — COMPONENT OF INTEREST TO BE DISPLAYED IS DETERMINED

V4 — WHETHER ELEMENT CORRELATION IS TO BE DISPLAYED OR NOT IS DETERMINED

T 9 — RESULT IS DISPLAYED ON SCREEN

END

# FIG.26

112(1)  112(2)  112(3)  · · ·  112(n-1)  112(n)

[A]  [B]  [C]  [D]  [E]

# FIG.27

114

| | A1 | A2 | A3 | A4 | A5 | A6 | A overall | | E1 | E2 | E3 | E4 | F overall |
|---|---|---|---|---|---|---|---|---|---|---|---|---|---|
| Lovely | 16 | 3 | 4 | 3 | 6 | 30 | 62 | ····· | 17 | 25 | 31 | 28 | 101 |
| Slim | 1 | 2 | 5 | 3 | 21 | 18 | 50 | ····· | 0 | 0 | 0 | 6 | 6 |
| Design | 13 | 8 | 3 | 2 | 0 | 0 | 26 | ····· | 29 | 36 | 25 | 0 | 90 |
| Sandal | 0 | 0 | 0 | 0 | 0 | 0 | 0 | ····· | 0 | 0 | 0 | 35 | 35 |
| Sexy | 1 | 21 | 10 | 12 | 3 | 4 | 51 | ····· | 4 | 0 | 7 | 8 | 19 |
| Tight | 0 | 1 | 3 | 11 | 8 | 0 | 23 | ····· | 6 | 0 | 0 | 7 | 13 |
| Material | 7 | 9 | 4 | 4 | 5 | 9 | 38 | ····· | 9 | 14 | 16 | 4 | 43 |
| ⋮ | ⋮ | ⋮ | ⋮ | ⋮ | ⋮ | ⋮ | ⋮ | ⋮ | ⋮ | ⋮ | ⋮ | ⋮ | ⋮ |
| Fluffy | 0 | 0 | 0 | 0 | 0 | 13 | 13 | ····· | 0 | 8 | 14 | 0 | 22 |
| Color | 14 | 17 | 9 | 15 | 7 | 16 | 78 | ····· | 27 | 33 | 28 | 13 | 101 |
| Gentle | 8 | 1 | 0 | 0 | 6 | 12 | 27 | ····· | 9 | 4 | 16 | 8 | 37 |

# FIG.28

# FIG.29

# FIG.30

Dress up

Pattern

112(n)

Cool

Grown up

Material

Design

E2

Sharp

Texture

Lovely

E1

E4

Length

Ankle

Fabric Color

Tight

Soft

Sexy

Accent Shoulder Bright Sandal

E

Leg

Fluffy

Denim

Slim

Fresh

E3

Measure

Gentle

Balance

Knee

Spunky

Cute

# FIG.31

Lovely

Color

Sandal

## INTERNATIONAL SEARCH REPORT

| | International application No. |
|---|---|
| | PCT/JP2012/002325 |

**A. CLASSIFICATION OF SUBJECT MATTER**
*G06Q30/02*(2012.01)i, *G06Q10/00*(2012.01)i

According to International Patent Classification (IPC) or to both national classification and IPC

**B. FIELDS SEARCHED**

Minimum documentation searched (classification system followed by classification symbols)
G06Q30/02, G06Q10/00

Documentation searched other than minimum documentation to the extent that such documents are included in the fields searched
    Jitsuyo Shinan Koho      1922-1996   Jitsuyo Shinan Toroku Koho   1996-2012
    Kokai Jitsuyo Shinan Koho   1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-271753 A  (Fujitsu FIP Corp.), 02 December 2010 (02.12.2010), entire text; all drawings (Family: none) | 1-15 |
| A | WO 2007/135796 A1  (Seiji OZAKI), 29 November 2007 (29.11.2007), entire text; all drawings (Family: none) | 1-15 |
| A | JP 2004-070915 A  (Kabushiki Kaisha Creative Brains), 04 March 2004 (04.03.2004), entire text; all drawings & JP 3470969 B | 1-15 |

☐   Further documents are listed in the continuation of Box C.      ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 April, 2012 (26.04.12) | 15 May, 2012 (15.05.12) |

| Name and mailing address of the ISA/ | Authorized officer |
|---|---|
|    Japanese Patent Office | |
| Facsimile No. | Telephone No. |

Form PCT/ISA/210 (second sheet) (July 2009)

**EP 2 717 209 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002149900 A
- JP 2006244049 A
- WO 3335602 A